# EUROPEAN PATENT SPECIFICATION

(11) **EP 1 960 814 B1**
(45) Date of publication and mention of the grant of the patent: **05.08.2020**
(21) Application number: 06841387.1
(22) Date of filing: 15.12.2006
(51) Int. Cl.: C09D 5/16, G02B 1/10, G02B 1/04, C09D 5/02

(54) **ARTICLE COATED WITH A ULTRA HIGH HYDROPHOBIC FILM AND PROCESS FOR OBTAINING SAME**
MIT EINEM ULTRAHOCHHYDROPHOBEN FILM BESCHICHTETER ARTIKEL UND PROZESS ZU SEINER ERHALTUNG
ARTICLE ENDUIT D UN FILM HAUTEMENT HYDROPHOBE ET SON PROCEDE DE FABRICATION

(30) Priority: 15.12.2005 US 304982
(43) Date of publication of application: 27.08.2008
(73) Proprietor: Essilor International, 94220 Charenton-le-Pont (FR)
(72) Inventor: MUISENER, Richard, F-94220 Charenton-le-pont (FR); ZHENG, Haipeng, St Petersburg, Florida 33709 (US)
(74) Representative: Jacobacci Coralis Harle
(86) International application number: PCT/EP2006/069786
(87) International publication number: WO 2007/068760

(56) References cited:
- EP-A- 1 640 419
- WO-A-03/016217
- WO-A-2004/111691
- WO-A-2005/068400
- WO-A1-2004/104116
- JP-A- 2000 308 846
- YÜCE M YAVUZ ET AL: "Tuning the surface hydrophobicity of polymer/nanoparticle composite films in the Wenzel regime by composition." LANGMUIR : THE ACS JOURNAL OF SURFACES AND COLLOIDS 24 MAY 2005, vol. 21, no. 11, 24 May 2005 (2005-05-24), pages 5073-5078, XP002451940 ISSN: 0743-7463

## Description

### BACKGROUND OF THE INVENTION

### 1. Field of the invention

The invention relates to articles coated with a durable, nanostructured film having ultra high hydrophobic properties, a coating process for their manufacture as well as the use of such ultra high hydrophobic films, especially in the optical technical field and in particular with ophthalmic glasses. The films comprise a nanostructured layer comprising nanoparticles and a binder, coated with a layer of a low surface energy compound.

### 2. Description of related art

Commercial coatings or substrates are easily soiled and can be difficult to clean. Even after cleaning, some residue may remain that can be detrimental to the original properties or performances. To prevent soiled surfaces and to allow the use of cleaning methods that leave little residue, a super or ultra high hydrophobic coating is typically applied onto the surface of the substrate. The anti-soiling film provides an outer surface that can be more resistant to contamination and more easily cleaned than the substrate alone.

The wettability of a surface depends on both the chemistry (chemical nature of the surface material) and the physical topography, especially surface roughness. It is well known that static water contact angles (WCA) of smooth hydrophobic surfaces are usually less than 115°; but when the hydrophobic surface becomes rough, it develops ultra high hydrophobic properties (i.e., WCA ≥ 115°). The static water contact angle may dramatically increase to 140°, and even higher (super hydrophobic surfaces).

Roughness reduces the ability for water to spread out over a hydrophobic surface: water drops rest only on the tops of the elevations and have only an extremely small contact area with the hydrophobic surface since they gather up into almost spherical beads. Such surfaces have very high contact angles.

Barthlott has first described in WO 96/04123 how a surface becomes super hydrophobic when roughness on a micron or sub-micron scale and hydrophobic properties are combined. Since then, methods of forming super-hydrophobic coatings ranging from 140° to almost 180° and applying such super-hydrophobic coatings to surfaces have been extensively described in the prior art, by creating micro or nanostructures, using nanofibers, nanoparticles, mesh-like substrates, cotton fibers, or through sol-gel processes, surface polymerizations or crystallizations.

However, most of the described manufactured articles present unsatisfactory properties for certain applications. For example, some of them are not optically transparent or have high haze (low transmittance) in visible range; well-aligned nanofiber or nanotube types of films can only grow on glass or metal in high temperature environment; many nanoparticle films have poor adhesion to a substrate; porous sol-gel films have low mechanical properties or scratch resistance.

For instance, WO 98/42452 and WO 01/14497 describe methods of making super hydrophobic coatings. However, the coatings are easily damaged and removed from the applied surfaces, having a limited lifetime.

Many patents like US 3,931,428, WO 04/90065 and WO 05/21843 disclose methods of forming durable or robust super hydrophobic coatings. The coatings have good adhesion to the substrates and good scratch hardness or abrasion resistance, but film transparency is not described to have been achieved.

US patent application 2005/0008876 provides a super-hydrophobic substrate that includes a substrate, an undercoating film formed on the substrate having minute recesses and projections in its surface, and a hydrophobic film formed on the minute recesses and projections. The films have much better transparency, due to the well-controlled structure size of recesses and projections in the range of 20 nm and 100 nm; but the films do not have good abrasion resistance, since after abrasion tests the contact angle data drop from 155° in average to about 110° among example samples.

EP 1479738 and WO 04/104116 disclose hydrophobic and even super-hydrophobic coatings having a surface roughness, comprising reactive inorganic nanoparticles, a reactive diluent and a substrate specific adhesion promoter. Due to large surface roughness over 500 nm, the coatings showing WCA over 120° could have high haze even though they maintain good transparency. In addition, an anti-fouling top coat reducing the surface energy is not described in combination with small roughness.

The above-mentioned super or ultra high hydrophobic surfaces have shown different kinds of problems which limit certain applications, like ophthalmic lens applications.

For example, there are no ultra high hydrophobic lenses available in the market today. Commercial lenses equipped with an anti-fouling top coat only have water contact angles of at most 110-115°. Therefore, super or ultra high hydrophobic films with durable performances, notably durable mechanical properties, and easy processability are very desirable in many specific applications.

### SUMMARY OF THE INVENTION

The present invention has been made in view of the above mentioned problems, and it is an object of the present invention to prepare a nanostructured film with controlled hydrophobicity, exhibiting a surface roughness in conjunction with a low energy surface. Properties of said nanostructured film should be durable.

It is also an object of the invention to provide hydrophobic coatings imparting to articles a great variety of surface properties, ranging from ultra high hydrophobic coatings with a limited surface roughness to super hydrophobic coatings with a high surface roughness.

To achieve the foregoing objects, and in accordance with the invention as embodied and broadly described herein, the present invention relates to an article having at least one surface, wherein said surface is at least partially coated with a ultra high hydrophobic film having a surface roughness such that the film exhibits a static water contact angle at least equal to 115°, and wherein said film is a nanostructured film comprising:
- a first layer comprising nanoparticles bound by at least one binder adhering to the surface of the article, and
- a second layer of an anti-fouling top coat at least partially coating said first layer.

The binder and the nanoparticles are comprised in said first layer in an amount such that the weight ratio of binder / nanoparticles ranges from 2:1 to 1:15, preferably from 1:1 to 1:15, more preferably from 1:1.1 to 1:10, and even better from 1:1.2 to 1:10. Such ratio is calculated using the weights of binder and nanoparticles employed to form said first layer.

According to preferred embodiments, the binder is a cross-linking agent, the nanoparticles have a particle size of less than or equal to 150 nm, the RMS surface roughness of the film ranges from 5 to 50 nm, the static water contact angle ranges from 115° to 160° and the anti-fouling top coat reduces surface energy of the article to less than 20 mJ/m². Such articles are particularly for use in ophthalmic optics.

In a particularly preferred embodiment, the inventive film exhibits roughness on various length scales.

The present invention also concerns a process for obtaining the above coated article, comprising:
- a) providing an article having at least one surface,
- b) forming onto at least part of said surface of the article a first layer comprising nanoparticles bound by at least one binder adhering to said surface of the article,
- c) depositing onto at least part of said first layer a layer of an anti-fouling top coat, and
- d) recovering an article which surface is at least partially coated with a ultra high hydrophobic nanostructured film having a surface roughness such that the film exhibits a static water contact angle at least equal to 115°.

The step of depositing onto at least part of the surface of the article a first layer of nanoparticles bound by at least one binder adhering to said surface of the article may be performed according to two preferred methods.

According to a first preferred method, formation of said first layer comprises:
- b1) depositing onto at least part of said surface of the article a layer of a coating solution comprising at least one binder,
- b2) depositing, onto the just deposited layer resulting from step b1), a layer of a coating solution comprising nanoparticles, and
- b3) hardening each deposited layer.

According to a second preferred method, formation of said first layer comprises:
- b4) depositing onto at least part of said surface of the article a layer of a coating solution comprising at least one binder and nanoparticles, and
- b5) hardening each deposited layer.

In further preferred embodiments:
A) steps b1) and b2) are performed once or more onto the layer resulting from step b2) or step b4);
B) step b4) is performed once or more onto a layer resulting from step b2) or step b4); or
C) a combination of embodiments A) and B) is performed once or more in any order onto a layer resulting from step b2) or step b4).

Embodiment A) can be detailed as:
A process, wherein steps b'1) and b'2) are performed once or more onto the layer resulting from step b2) or step b4):
- b'1) depositing onto the just deposited layer resulting from the preceding step, a layer of a coating solution comprising at least one binder, and
- b'2) depositing, onto the just deposited layer resulting from the preceding step, a layer of a coating solution comprising nanoparticles.

Embodiment B) can be detailed as:
A process, wherein step b'4) is performed once or more onto the layer resulting from step b2) or step b4):
- b'4) depositing onto the just deposited layer resulting from the preceding step, a layer of a coating solution comprising at least one binder and nanoparticles.

Embodiment C) can be detailed as:
A process, wherein a combination of:
i) steps b'1) and b'2); and
ii) step b'4);
is performed once or more in any order onto the layer resulting from step b2) or step b4), steps b'1), b'2) and b'4) being such as defined hereinabove.

The nanoparticles may be a mixture of nanoparticles with multiple size ranges, or the nanoparticles employed in at least one step b'2) or b'4) may not have the same size range as the nanoparticles initially deposited in step b2) or b4).

Other objects, features and advantages of the present invention will become apparent from this description. It should be understood, however, that the detailed description and the specific examples, while indicating specific embodiments of the invention, are given by way of illustration only, since various changes and modifications within the scope of the invention will become apparent to those skilled in the art from this detailed description.

### BRIEF DESCRIPTION OF THE DRAWINGS

Figure 1 is a nanostructured layer model explaining why control of the film structure is the key point to obtain good overall performance of the film.
Figure 2 is a nanostructured layer model with apparent nanoparticles showing the types of structures which may be obtained according to the deposition methods disclosed.
Figure 3 represents the different degrees of roughness of the films which may be obtained according to the invention. The binder and the anti-fouling top coat have been omitted for clarity.

### DETAILED DESCRIPTION OF THE INVENTION AND PREFERRED EMBODIMENTS

The terms "comprise" (and any form of comprise, such as "comprises" and "comprising"), "have" (and any form of have, such as "has" and "having"), "contain" (and any form of contain, such as "contains" and "containing"), and "include" (and any form of include, such as "includes" and "including") are open-ended linking verbs. As a result, a method, or a step in a method, that "comprises," "has," "contains," or "includes" one or more steps or elements possesses those one or more steps or elements, but is not limited to possessing only those one or more steps or elements.

The nanostructured film of the invention essentially comprises two layers: a nanostructured layer comprising at least one binder and nanoparticles associated with the binder; and a layer of an anti-fouling top coat imparting a low energy surface, which at least partially covers the nanostructured layer. The inventive film exhibits specific physical structure created by a careful choice of the particles resulting in specific surface features, i.e., a random rough surface.

According to the invention, the layer of nanoparticles bound by at least one binder adhering to the surface of the article constitutes a nanostructured layer. Within the context of the invention, the term nanostructured film or layer refers to a film or layer with a degree of surface roughness where the dimensions of the features on the surface are in the range of the nanometer. The dimensions of the features on the surface are closely related to those of the nanoparticles used.

Static contact angles disclosed herein are determined according to the liquid drop method, in which a liquid drop having a diameter smaller than 2 mm is formed on the optical article and the contact angle is measured. It corresponds to the angle at which the surface of the liquid drop meets the surface of the optical article. Unless otherwise noted, all contact angles are static contact angles with deionized water, abbreviated to WCA. Contact angle is a measure of the tendency for liquids to spread over or wet a surface. The lower the contact angle, the more the liquid spreads over the solid.

The invention provides films having controlled hydrophobicity. WCA of the article according to the invention is at least equal to 115°, preferably at least equal to 120°, more preferably at least equal to 125°. To obtain satisfactory properties such as durability and transparency, it is also preferred that WCA do not exceed 160° and more preferably do not exceed 150°, which will be explained below.

The binder (or adhesive) used in the article of the invention may be any material used to form a film. The binder is defined as a component that improves the adhesion of the particles to the article. Without such binder, adhesion of the nanoparticles to the article and satisfactory abrasion and/or scratch resistance properties are not achieved.

Preferably, the binder is a compound capable of establishing at least one intermolecular bond or interaction with groups at the surface of the article. Different categories of intermolecular bonds or interactions can be established, including, without limitation: covalent bonds and non-covalent intermolecular bonds or interactions, such as a hydrogen bond, a van der Waals bond, a hydrophobic interaction, an aromatic CH-π interaction, a cation-π interaction or a charge-charge attractive interaction. Preferably, the binder is a compound capable of establishing at least one covalent bond with a group at the surface of the article.

Preferably, the binder is a compound capable of establishing at least one intermolecular bond or interaction with a group at the surface of the nanoparticles. It is also preferred that the binder be a compound capable of establishing at least one covalent bond a group at the surface of the nanoparticles. Ideally, the binder is a compound capable of establishing covalent bonds with both groups at the surface of the nanoparticles and at the surface of the article.

Preferably, the binder is an organic material. The binder can be formed from a thermoplastic material. Alternatively, the binder can be formed from a thermosetting material, or a material that is capable of being cross-linked. It is also within the scope of this invention to have mixtures of those materials, for example a mixture a thermoplastic binder and a cross-linked binder.

More preferably, the binder is a material which is capable of being cross-linked, for example by polycondensation, polyaddition or hydrolysis. Various condensation curable resins and addition polymerizable resins, for example ethylenically unsaturated coating solutions comprising monomers and/or prepolymers, can be used to form the binders. Specific examples of cross-linkable materials useable include phenolic resins, bismaleimide resins, vinyl ether resins, aminoplast resins having pendant alpha, beta unsaturated carbonyl groups, urethane resins, polyvinylpyrrolidones, epoxy resins, (meth)acrylate resins, (meth)acrylated isocyanurate resins, ureaformaldehyde resins, isocyanurate resins, (meth)acrylated urethane resins, (meth)acrylated epoxy resins, acrylic emulsions, butadiene emulsions, polyvinyl ester dispersions, styrene/butadiene latexes or mixtures thereof. The term (meth)acrylate includes both acrylates and methacrylates.

Other examples of useful binder resin materials can be found in EP 1315600, US 5,378,252, and US 5,236,472.

Another category of binder materials useful in the present invention comprises silica organosols, for example functional silanes, siloxanes or silicates (alkali metal salts of silicon-oxygen anions) based compounds, or hydrolyzates thereof. Upon hydrolysis, such organofunctional binders generate interpenetrating networks by forming silanol groups, which are capable of bonding with the organic or inorganic surface of the article and have an affinity for the anti-fouling top coat applied thereover.

Examples of silicon-containing binders are amino-functional silane or amino-functional siloxane compounds such as amino alkoxy silanes, hydroxyl- or lower alkoxy-terminated silanes such as epoxy alkoxy silanes, ureidoalkyl alkoxy silanes, dialkyl dialkoxy silanes (e.g., dimethyl diethoxy silane), (meth)acrylic silanes, carboxylic silanes, silane-containing polyvinyl alcohol, vinylsilanes, allylsilanes, and mixtures thereof.

Amino alkoxy silanes may be chosen from, without limitation, 3-amino propyl triethoxy silane, 3-amino propyl methyl dimethoxy silane, 3-(2-amino ethyl)-3-amino propyl trimethoxy silane, amino ethyl triethoxysilane, 3-(2-amino ethyl) amino propyl methyl dimethoxy silane, 3-(2-amino ethyl)-3-amino propyl triethoxy silane, 3-amino propyl methyl diethoxysilane, 3-amino propyl trimethoxysilane, and mixtures thereof.

Ureidoalkyl alkoxy silanes may be chosen from, without limitation, ureidomethyl trimethoxysilane, ureidoethyl trimethoxysilane, ureidopropyl trimethoxysilane, ureidomethyl triethoxysilane, ureidoethyl triethoxysilane, ureidopropyl triethoxysilane, and mixtures thereof.

The binder preferably comprises epoxy alkoxy silanes compounds, more preferably alkoxysilanes having a glycidyl group and even more preferably trifunctional alkoxysilanes having a glycidyl group.

Among such compounds, the binder may comprise, for example, glycidoxy methyl trimethoxysilane, glycidoxy methyl triethoxysilane, glycidoxy methyl tripropoxysilane, α-glycidoxy ethyl trimethoxysilane, α-glycidoxy ethyl triethoxysilane, β-glycidoxy ethyl trimethoxysilane, β-glycidoxy ethyl triethoxysilane, β-glycidoxy ethyl tripropoxysilane, α-glycidoxy propyl trimethoxysilane, α-glycidoxy propyl triethoxysilane, α-glycidoxy propyl tripropoxysilane, β-glycidoxy propyl trimethoxysilane, β-glycidoxy propyl triethoxysilane, β-glycidoxy propyl tripropoxysilane, γ-glycidoxy propyl trimethoxysilane, γ-glycidoxy propyl triethoxysilane, γ-glycidoxy propyl tripropoxysilane, hydrolyzates thereof, and mixtures thereof. γ-glycidoxy propyl trimethoxysilane (Glymo), which is commercially available from Merck, is the most preferred binder material.

Other useful alkoxysilanes having a glycidyl group include γ-glycidoxypropyl pentamethyl disiloxane, γ-glycidoxypropyl methyl diisopropenoxy silane, γ-glycidoxypropyl methyl diethoxysilane, γ-glycidoxypropyl dimethyl ethoxysilane, γ-glycidoxypropyl diisopropyl ethoxysilane, γ-glycidoxypropyl bis (trimethylsiloxy) methylsilane, and mixtures thereof.

The above mentioned examples of binder materials are a representative showing of binder materials, and not meant to encompass all binder materials. Those skilled in the art may recognize additional binder materials that may fall within the scope of the invention.

As used herein, the term "nanoparticles" is intended to mean solid particles of which the majority has a size higher than or equal to 1 nm but inferior to 1 µm. Nanoparticles may be spherical or non spherical, elongated, even nanocrystals. The nanoparticles may be bound, adhered to, and/or dispersed throughout the binder.

In the framework of this invention, the particle size is its diameter if the particle is spherical and its highest length if the particle is not spherical (length of the primary axis of the nanoparticles, which is defined as the longest straight line that can be drawn from one side of a particle to the opposite side). Processes for determining the particle size include BET adsorption, optical or scanning electron microscopy, or atomic force microscopy (AFM) imaging.

In certain applications such as ophthalmic optics, transparency of the film is required. It is known that transparency is competitive with super hydrophobicity. Films with a limited roughness are optically clear, and may even exhibit anti-reflective properties. If, however, the film roughness is too high (protruded structures of more than a few hundred nanometers), the light is scattered from the film surface, resulting in low transparency or high haze of the article. In the context of the present invention, the surface roughness is controlled, among others, by the size of the nanoparticles, and thus the optical appearance of the ultra high hydrophobic film may be varied from clear, optionally antireflective, to opaque.

Surface roughness (RMS average) of the inventive film (nanoparticles layer(s) + anti-fouling top coat) preferably ranges from 5 to 50 nm, more preferably from 10 to 30 nm and even more preferably from 10 to 20 nm. A surface roughness below 5 nm does not impart to the film good ultra high hydrophobic properties (WCA < 115°). A surface roughness over 50 nm generally leads to WCA over 140°. Such films exhibit super hydrophobic properties, however, most of them are not durable, which limit their applications: those super hydrophobic films do not pass the abrasion tests, since they exhibit contact angles down to 110-115° after having been submitted to the abrasion tests. Moreover, they may have high haze, which may be also acceptable in certain applications, outside of the ophthalmic lens industry.

For applications such as ophthalmic optics, the nanoparticles used have such a size that they do not significantly influence the transparency of the film. Actually, big nanoparticles provide a surface having high hydrophobicity, but high haze.

Preferably, the nanoparticles used in the inventive ultra high hydrophobic film have a particle size of less than or equal to 150 nm, more preferably less than or equal to 100 nm, even more preferably less than or equal to 70 nm. Nanoparticles which majority has a particle size of less than or equal to 40 nm are also useful. Preferably, the nanoparticles have a particle size higher than or equal to 10 nm. It is preferred that all nanoparticles satisfy these conditions.

In a preferred embodiment, the first layer of the inventive film comprises nanoparticles having a particle size ranging from 20 to 150 nm, preferably from 20 to 100 nm.

In this context, the coated inventive article has an optical transmittance factor T higher than 85% in at least a range of wavelengths of the visible spectrum, more preferably higher than 90%, and even more preferably higher than 92%; and a haze lower than 0.8, preferably lower than 0.5.

Inventive ultra high hydrophobic films with nanoparticles, the particle size of which is less than or equal to 150 nm, have antireflective properties per se. Preferably, the reflection in the visible range of the coated article according to the invention is lower than 3%, and even better lower than 2%.

Nanoparticles may be organic, inorganic, or a mixture of both can be used. Preferably, inorganic nanoparticles are used, especially metallic or metalloid oxide, nitride or fluoride nanoparticles, or mixtures thereof.

Suitable inorganic nanoparticles are for example nanoparticles of aluminum oxide Al₂O₃, silicon oxide SiO or SiO₂, zirconium oxide ZrO₂, titanium oxide TiO₂, antimony oxide, tantalum oxide Ta₂O₅, zinc oxide, tin oxide, indium oxide, cerium oxide, Si₃N₄, MgF₂ or their mixtures. It is also possible to use particles of mixed oxides. Using different types of nanoparticles allows making hetero-structured nanoparticles layers. Preferably, the nanoparticles are particles of aluminum oxide, zirconium oxide or silicon oxide SiO₂, more preferably SiO₂ nanoparticles.

When organic nanoparticles such as thermoplastic nanoparticles are used, they preferably comprise groups capable of establishing a covalent bond with the binder, for example hydroxyl groups.

As well known in the art, the refractive index of the film can in part be tuned by the choice of nanoparticle used.

Particularly useful nanoparticles are those having reactive groups attached to them that are capable of establishing at least one intermolecular bond or interaction with the binder, preferably a covalent bond. Reactive groups can be originally present in the structure of nanoparticles, for example hydroxyl groups (silanols) in SiO₂ which are capable of binding with a large variety of binders such as silicon-containing binders. However, the present invention also encompasses the case when new reactive groups are created at the surface of the nanoparticles, for example by chemical grafting. Examples of reactive groups which may be created are, without limitation, ethylenically unsaturated groups such as (meth)acrylate or vinylic groups, epoxides, isocyanates, silanes, siloxanes, silicates, thiols, alcohols. In some cases, reactive groups of the nanoparticles are capable of cross-linking with the binder.

Nanoparticles which undergo grafting may be nanoparticles with or without existing reactive groups.

In a preferred embodiment, the nanoparticles comprise silanol groups at their surface, which can react with functional groups of the binder. An example of such reaction is the formation of covalent bonds between those silanol groups and hydrolyzates of organic alkoxysilanes.

In the context of the invention, the binder and the nanoparticles may be applied from a coating solution by any process known in the art of liquid composition coating. Examples of suitable processes are spin coating, dip coating, spray coating, flow coating, meniscus coating, capillary coating and roll coating. Spin coating and dip coating are preferred.

According to a first embodiment of the invention, the coating solution contains at least one binder and nanoparticles. Although such coating solution is not a solution but rather a dispersion, it is usually called "the coating solution" within the present application. Such liquid coating composition is another object of the invention.

The coating solution optionally comprises a catalytic amount of at least one curing catalyst such as an initiator when the energy source used to cure or set the binder precursor is heat, ultraviolet light, or visible light. Examples of curing agents such as photoinitiators that generate free radicals upon exposure to ultraviolet light or heat include organic peroxides, azo compounds, quinones, nitroso compounds, acyl halides, hydrazones, mercapto compounds, pyrylium compounds, imidazoles, chlorotriazines, benzoin, benzoin alkyl ethers, diketones, phenones, and mixtures thereof.

When silicon-containing binders are employed, a curing catalyst such as aluminum acetylacetonate or a hydrolyzate thereof may be used.

The remaining of the composition is essentially comprised of solvents such as water or water-miscible alcohols, essentially ethanol, or mixtures of water and water-miscible alcohols.

The second embodiment of the invention differs from the first embodiment in that the nanoparticles and the at least one binder are not comprised in the same coating solution. According to that embodiment, a coating solution containing the binder, a solvent and optionally a curing catalyst as described above is first deposited onto at least part of the surface of the article, by dip coating or spin coating for example. The coated article may be rinsed with deionized water. Subsequently, a coating solution containing nanoparticles, a solvent and optionally a curing catalyst as described above is deposited onto the binder layer by spin coating or dip coating, for example. Such process is called a self-assembly process.

Obviously, it is possible to perform multiple depositions of nanoparticles/binder using a combination of the above disclosed methods, so as to create what could be considered as a multilayered nanostructured layer comprising several sub-layers of nanoparticles.

Nanoparticles may be deposited using a dilute coating solution comprising 1-15%, preferably 1-10% and more preferably 2-8% of nanoparticles in weight relative to the total weight of the coating solution. Films with a too high concentration of particles have a decreased transmittance, but a higher surface roughness.

The binder is comprised in the coating solution in an amount ranging from 0.5 to 4% by weight, preferably 0.8 to 3% and more preferably 1 to 2%, relative to the total weight of the coating solution. If the amount of binder used is too high, ultra high hydrophobic properties may not be obtained. On the contrary, if the amount of binder used is too low, WCA is higher but weaker adhesion of the nanostructured layer to the anti-fouling layer and/or to the article is observed.

Consequently, the weight ratio of binder / nanoparticles employed to form the first layer of the inventive film is a crucial parameter for obtaining a film with ultra high hydrophobic properties. Such ratio varies from 2:1 to 1:15, preferably from 1:1 to 1:15, more preferably from 1:1.1 to 1:10, and even better from 1:1.2 to 1:10. If the binder is obtained from a reactive binder precursor, the above weight ratio is calculated using the weight of the binder precursor.

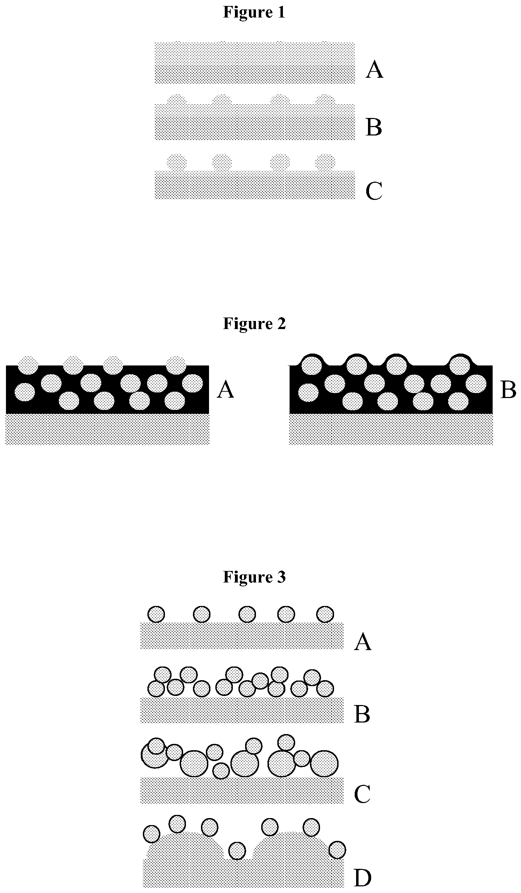

Figure 1 represents a nanostructured layer model explaining why control of the film structure is the key point to obtain good overall performance of the film.

Three kinds of surface topography can be obtained by depositing a coating solution comprising nanoparticles and a binder. If the amount of binder is too high or if the amount of nanoparticles is too low, a completely embedded nanoparticle layer is obtained, having good adhesion but low roughness and consequently weak hydrophobic properties (Figure 1A: WCA of the film may drop below 115°). If the amount of binder is too low or if the amount of nanoparticles is too high, a barely embedded particle layer is obtained, having high roughness and consequently high hydrophobic properties (Figure 1C). However, the nanostructured film which would be obtained from such nanostructured layer would not have a satisfactory abrasion and/or scratch resistance, transparency, durability and adhesion to the article or the underlying coating. Figure 1B represents the ideal case. If the ratio of binder / nanoparticles is chosen in the ranges as described above, a partly embedded particle film is obtained. Although WCA is not as high as in the case of figure 1C, the highest overall performance is observed.

Another possibility for obtaining the structure of figure 1B is to use a binder having sponge properties, for example a thermoplastic material. In that case, the binder may be deposited first, and the nanoparticles deposited thereon. After depositing the nanoparticles, the article is subjected for example to a heating step and the particles can sink down to the binder layer.

Figure 2 represents a nanostructured layer model with apparent nanoparticles showing the types of structures which may be obtained according to the deposition methods disclosed. In figure 2A, nanoparticles are partly embedded into the binder, while in figure 2B, nanoparticles are completely covered by the binder. Even in this case, the nanostructured layer still presents the nanoparticle features and imparts to the article ultra high hydrophobic properties.

The coating solutions comprising the binder and/or the nanoparticles are typically in a flowable state, which means that they can be spread across a surface using any of a variety of coating methods.

During the process of making the inventive article, the coating solution(s) comprising nanoparticles and binder, once deposited, are hardened by being exposed to appropriate conditions, such as exposure to heat in an oven or drying with air. Hardening a coating layer comprise evaporating the solvent and solidifying the binder. For cross-linkable coating solutions, the deposited coating solution is exposed to the appropriate energy source to initiate the polymerization or curing and to form the hardened binder. The binder is typically in a solid, non-flowable state in the manufactured article. Then, the anti-fouling top coat can be deposited onto the nanostructured layer of nanoparticles. In case of multiple applications of binder and nanoparticles, one prefers applying only one drying step for the whole stack before the top coat deposition.

In a particularly preferred embodiment of the invention, the durable, nanostructured film exhibits multiple length scales of roughness, i.e., possess more than one degree of roughness, so as to improve the hydrophobic properties. Films in which all nanoparticles have the same size or in which the sizes of the nanoparticles are different but belong to a narrow size range possess only one degree of roughness. Means of achieving multiple length scales of roughness are very diverse and only a few will be presented in the present disclosure, to which the invention is not limited.

A first manner of achieving this goal is using a coating solution comprising a mixture of nanoparticles with multiple length scales (i.e., multiple size ranges). In the examples on the present disclosure, three types of SiO₂ nanoparticles have been employed: SiO₂A nanoparticles (size: 10-15 nm), SiO₂B nanoparticles (size: 40-50nm) and SiO₂C nanoparticles (size: ∼100nm). Different mixtures of the three types of nanoparticles are exemplified. Obviously, average size of the different samples of nanoparticles employed must be sufficiently different to reach different scales of roughness.

A second manner of achieving multiple length scales of roughness is depositing successively several coating solutions comprising nanoparticles with different sizes or different size ranges. It is not necessary to deposit the nanoparticles in the order of decreasing size. Smaller nanoparticles may be deposited before bigger ones.

Thus, according to the above disclosed first and second manner, the first layer comprising nanoparticles bound by at least one binder adhering to the surface of the inventive article comprises nanoparticles with multiple size ranges.

Multiple depositions may be performed using a combination of the disclosed methods, i.e., using a coating solution comprising both nanoparticles and at least one binder or first depositing the binder and second depositing the nanoparticles.

According to the invention, a nanostructured film with multiple length scales of roughness can also be obtained by using an article already provided with nano-patterns, which have been formed by molding, transfer molded or embossing. By nano-patterns, it is meant patterns having a size higher than or equal to 1 nm but inferior to 1 µm. According to that embodiment, the surface of the article to which the first layer of the film adheres is a nanostructured surface. Such articles may be obtained, without limitation, according to the following manner:
In a first step, a nanostructured surface is created at the surface of a smooth article by embossing or transferring a nanostructure from a mold piece. In a subsequent step, a first layer comprising nanoparticles bound by at least one binder is deposited as described previously onto the thus obtained nanostructured surface of the article and adheres to it. Finally, a second layer of an anti-fouling top coat is deposited onto at least part of the first layer.

Creation of nanostructures by direct molding transfer or embossing is well known in the art and is described for example in WO 2004/002706 or EP 0400672. In one embodiment, nanostructure transfer is performed by coating at least part of the surface of an article with a layer of resin, which is then cured in contact with a mold piece bearing a nanostructure. The resin may be a silicone or acrylic resin, but is not limited to.

The nanostructure which may be created at the surface of the article by embossing, molding or transfer molding can be, without limitation, a moth-eye nanostructure, for example, a moth-eye nanostructure with a pitch in the order of 150 nm to 500 nm, typically 250 nm.

Figure 3 represents the different degrees of roughness of the films which may be obtained according to the invention. The binder and the anti-fouling top coat have been omitted for clarity.

In figure 3A and 3B, nanoparticles have the same size range and generate only one degree of roughness. Figure 3A corresponds to deposition of the totality of the nanoparticles at once. In figure 3B, two coating solutions comprising the same nanoparticles have been employed successively, generating what could be considered as a nanostructured layer comprising two sub-layers.

Figure 3C and 3D correspond to films exhibiting multiple length scales of roughness. In figure 3C, a coating solution comprising a mixture of big nanoparticles and small nanoparticles has been employed. The nanoparticles are random packed. In figure 3D, nanoparticles have been randomly deposited onto an article which surface is a moth-eye nanostructured surface, thus creating another degree of roughness.

The layer of anti-fouling top coat which is deposited onto at least part of the nanostructured layer of nanoparticles is a low surface energy top coat.

The anti-fouling top coat is defined as a hydrophobic and/or oleophobic surface coating. The ones preferably used in this invention are those which reduce surface energy of the article to less than 20 mJ/m². The invention has a particular interest when using anti-fouling top coats having a surface energy of less than 14 mJ/m² and even better less than 12 mJ/m².

The surface energy values referred above are calculated according to Owens Wendt method, described in the following document: Owens, D. K.; Wendt, R. G. "Estimation of the surface force energy of polymers", J. Appl. Polym. Sci. 1969, 51, 1741-1747.

The anti-fouling top coat according to the invention is preferably of organic nature. By organic nature, it is meant a layer which is comprised of at least 40% by weight, preferably at least 50% by weight of organic materials, relative to the total weight of the coating layer. A preferred anti-fouling top coat is made from a liquid coating material comprising at least one fluorinated compound.

Hydrophobic and/or oleophobic surface coatings most often comprise silane-based compounds bearing fluorinated groups, in particular perfluorocarbon or perfluoropolyether group(s). By way of example, silazane, polysilazane or silicone compounds are to be mentioned, comprising one or more fluorine-containing groups such as those mentioned here above. Such compounds have been widely disclosed in the previous art, for example in Patents US 4410563, EP 0203730, EP 749021, EP 844265 and EP 933377.

A classical method to form an anti-fouling top coat consists in depositing compounds bearing fluorinated groups and Si-R groups, R representing an -OH group or a precursor thereof, such as -Cl, -NH₂, -NH- or -O-alkyl, preferably an alkoxy group. Such compounds may perform, at the surface onto which they are deposited, directly or after hydrolysis, polymerization and/or cross-linking reactions with pendent reactive groups.

Preferred fluorinated compounds are silanes and silazanes bearing at least one group selected from fluorinated hydrocarcarbons, perfluorocarbons, fluorinated polyethers such as F₃C-(OC₃F₆)₂₄-O-(CF₂)₂-(CH₂)₂-O-CH₂-Si(OCH₃)₃ and perfluoropolyethers, in particular perfluoropolyethers.

Among fluorosilanes there may be cited the compounds of formulae: 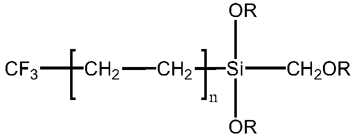 wherein n = 5, 7, 9 or 11 and R is an alkyl group, typically a C₁-C₁₀ alkyl group such as methyl, ethyl and propyl;

CF₃CH₂CH₂SiCl₃;

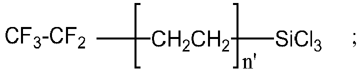

and 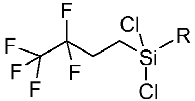 wherein n' = 7 or 9 and R is as defined above.

Compositions containing fluorosilanes compounds also useful for making hydrophobic and/or oleophobic top coats are disclosed in US 6,183,872. Such compositions comprise silicon-containing organic fluoropolymers represented by the below general formula and having a number average molecular weight of from 5×10² to 1×10⁵. 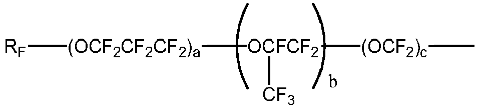 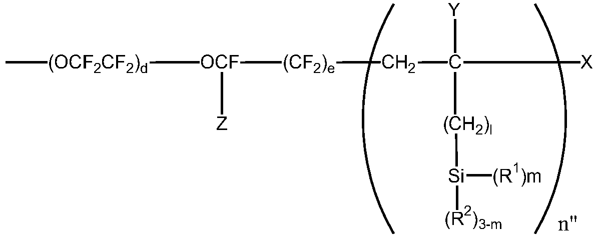 wherein R_{F} represents a perfluoroalkyl group, Z represents a fluorine atom or a trifluoromethyl group, a, b, c, d and e each independently represent 0 or an integer equal to or higher than 1, provided that a + b + c + d + e is not less than 1 and the order of the repeating units parenthesized by subscripts a, b, c, d and e occurring in the above formula is not limited to that shown ; Y represents a hydrogen atom or an alkyl group containing 1 to 4 carbon atoms ; X represents a hydrogen, bromine or iodine atom ; R¹ represents a hydroxyl group or a hydrolyzable substituent group ; R² represents a hydrogen atom or a monovalent hydrocarbon group ; I represents 0, 1 or 2 ; m represents 1, 2 or 3 ; and n" represents an integer equal to or higher than 1, preferably equal to or higher than 2.

Other preferred compositions for forming the hydrophobic and/or oleophobic surface coating are those containing compounds comprising fluorinated polyether groups, in particular perfluoropolyether groups. A particular preferred class of compositions containing fluorinated polyether groups is disclosed in US 6,277,485. The anti-fouling top coats of US 6,277,485 are at least partially cured coatings comprising a fluorinated siloxane prepared by applying a coating composition (typically in the form of a solution) comprising at least one fluorinated silane of the following formula: 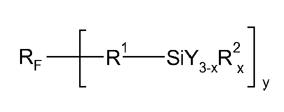 wherein R_{F} is a monovalent or divalent polyfluoro polyether group ; R¹ is a divalent alkylene group, arylene group, or combinations thereof, optionally containing one or more heteroatoms or functional groups and optionally substituted with halide atoms, and preferably containing 2 to 16 carbon atoms ; R² is a lower alkyl group (i.e., a C₁-C₄ alkyl group) ; Y is a halide atom, a lower alkoxy group (i.e., a C₁-C₄ alkoxy group, preferably, a methoxy or ethoxy group), or a lower acyloxy group (i.e., -OC(O)R³ wherein R³ is a C₁-C₄ alkyl group) ; x is 0 or 1 ; and y is 1 (R_{F} is monovalent) or 2 (R_{F} is divalent). Suitable compounds typically have a molecular weight (number average) of at least about 1000. Preferably, Y is a lower alkoxy group and R_{F} is a perfluoro polyether group.

Commercial compositions for making anti-fouling top coats are the compositions KY130 and KP 801M commercialized by Shin-Etsu Chemical and the composition OPTOOL DSX (a fluorine-based resin comprising perfluoropropylene moieties) commercialized by Daikin Industries. OPTOOL DSX is the most preferred coating material for anti-fouling top coats.

The liquid coating material for forming the anti-fouling top coat of the invention may comprise one or more of the above cited compounds. Preferably, such compounds or mixtures of compounds are liquid or can be rendered liquid by heating, thus being in a suitable state for deposition.

The deposition techniques for such anti-fouling top coats are very diverse, including liquid phase deposition such as dip coating, spin coating (centrifugation), spray coating, or vapor phase deposition (vacuum evaporation). Of which, deposition by spin or dip coating is preferred.

If the anti-fouling top coat is applied under a liquid form, at least one solvent is added to the coating material so as to prepare a liquid coating solution with a concentration and viscosity suitable for coating. Deposition is followed by curing.

In this connection, preferred solvents are fluorinated solvents and alcanols such as methanol, preferably fluorinated solvents. Examples of fluorinated solvents include any partially or totally fluorinated organic molecule having a carbon chain with from about 1 to about 25 carbon atoms, such as fluorinated alkanes, preferably perfluoro derivatives and fluorinated ether oxides, preferably perfluoroalkyl alkyl ether oxides, and mixtures thereof. As fluorinated alkanes, perfluorohexane ("Demnum" from DAIKIN Industries) may be used. As fluorinated ether oxides, methyl perfluoroalkyl ethers may be used, for instance methyl nonafluoro-isobutyl ether, methyl nonafluorobutyl ether or mixtures thereof, such as the commercial mixture sold by 3M under the trade name HFE-7100. The amount of solvent in the coating solution preferably ranges from 80 to 99.99% in weight.

The nanostructured layer of nanoparticles is at least partially coated with the anti-fouling top coat material. In one embodiment, the entire surface of the layer comprising nanoparticles and binder is fully covered with the anti-fouling top coat.

Special care, however, must be taken so as to not suppress or considerably decrease the surface roughness created by the nanoparticles, which is necessary to obtain ultra high hydrophobic properties. The amount of anti-fouling material deposited has to be chosen so as to keep WCA ≥ 115°.

Generally, the deposited anti-fouling top coat has a physical thickness lower than 30 nm, preferably ranging from 1 to 20 nm, more preferably ranging from 1 to 10 nm, and even better from 1 to 5 nm. Control of the deposited thickness can be performed by means of a quartz scale.

The anti-fouling top coat used herein may be used to improve dirty mark resistance of the finished article, which is particularly useful for optical articles. Reducing the surface energy avoids the adhesion of fatty deposits, such as fingerprints, sebum, sweat, cosmetics, which are thus easier to remove.

Preferably, physical thickness of the inventive film (nanoparticles layer(s) + anti-fouling top coat) is lower than 1 µm, more preferably ranges from 50 nm to 700nm, and even better from 50 nm to 550 nm. The thickness of the layer encompasses the height of the nanoparticles. Preferably, physical thickness of the nanoparticles layer(s), i.e., physical thickness of the layer which has been defined as the "first layer of the film" ranges from 30 to 250 nm, more preferably from 40 to 200 nm, and even more preferably from 50 to 150 nm.

The durable, structured film of the invention may be applied in any industry where anti-soiling surfaces are needed, such as, without limitation, optics, painting industry, printing industry, food industry, automobile industry, display industry, biomedical field and textile manufacture.

The article which surface is at least partially coated with the inventive film may be made of any material. Materials which can be used include, without limitation, metal (including mild steel, carbon steel, stainless steel, gray cast iron, titanium, aluminum and the like), metal alloys (copper, brass and the like), exotic metal alloys, ceramics, glass, wood (including pine, oak, maple elm, walnut, hickory, mahogany, cherry and the like), wood like materials (including particle board, plywood, veneers and the like) composites, painted surfaces, synthetic polymers such as plastics (including thermoplastics and reinforced thermoplastics), stones (including jewelry, marble, granite, and semi precious stones), glass surfaces (windows, including home windows, office windows, car windows, train windows, bus windows and the like, glass display shelves). Examples of specific articles are optical articles such as ophthalmic lenses, lens blanks or contact lenses, glass television screens, mirrors, metal engine components, painted automotive components, bath tubs, showers, sinks, walls and floors. Examples of specific synthetic polymers are polyethylene, polyacrylics, polypropylene, polyvinyl chloride polyamides, polystyrene, polyurethanes, polyfluorocarbons, polyesters, silicon rubber, hydrocarbon rubbers, polycarbonates.

The surface of the article onto which the inventive film will be deposited may optionally be subjected to a pre-treatment step intended to improve adhesion, for example a high-frequency discharge plasma treatment, a glow discharge plasma treatment, a corona treatment, an electron beam treatment, an ion beam treatment, an acid or base treatment.

The inventive films have particular applications in optics, preferably ophthalmic optics, since it has been demonstrated that a compromise among several parameters (WCA, size of the nanoparticles, surface roughness, weight ratio of binder / nanoparticles) could be made so as to obtain optically transparent, durable articles such as ophthalmic lenses, with high transmittance (low haze), anti-reflection properties, abrasion and/or scratch resistance, ultra high hydrophobic properties, oleophobic properties, preferably a static contact angle with oleic acid of 90° to 100°, and excellent adhesion of the film to most glass substrates. Moreover, the manufacture process is simple, does not require high temperatures (≤100 °C) process, and uses environment friendly solvents (water or water/alcohol co-solvent). It is an interesting alternative to traditional processes for obtaining nanostructured films, such as photolithography or micro-molding.

The balance relationship existing between the surface hydrophobicity and the film performance is worth to be noted. Thus, optical articles coated with the inventive films preferably have a WCA ranging from 115° to 160°, preferably 115° to 150°, a particle size of less than or equal to 150 nm and a weight ratio of binder / nanoparticles as described above.

In the field of ophthalmic optics, the article comprises a substrate made of mineral glass or organic glass, preferably organic glass. The organic glasses can be either thermoplastic materials such as polycarbonates and thermoplastic polyurethanes or thermosetting (cross-linked) materials such as diethylene glycol bis(allylcarbonate) polymers and copolymers (in particular CR 39® from PPG Industries), thermosetting polyurethanes, polythiourethanes, polyepoxides, polyepisulfides, poly(meth)acrylates and copolymers based substrates, such as substrates comprising (meth)acrylic polymers and copolymers derived from bisphenol-A, polythio(meth)acrylates, as well as copolymers thereof and blends thereof. Preferred materials for the lens substrate are polycarbonates and diethylene glycol bis(allylcarbonate) copolymers, in particular substrates made of polycarbonate.

The film may be deposited onto a naked substrate or onto the outermost coating layer of the substrate if the substrate is coated with surface coatings.

Actually, it is usual practice to coat at least one main surface of a lens substrate with successively, starting from the surface of the lens substrate, an impact-resistant coating (impact resistant primer), an abrasion- and/or scratch-resistant coating (hard coat), an anti-reflection coating and an anti-fouling top coat. Other coatings such as a polarized coating, a photochromic, a dyeing coating or an adhesive layer, for example an adhesive polyurethane layer, may also be applied onto one or both surfaces of the lens substrate.

According to the invention, the article may comprise a substrate coated with an outermost coating layer, said outermost coating layer being chosen from any of the above coatings, preferably an abrasion- and/or scratch-resistant coating, an impact-resistant coating or an anti-reflection coating, which may be mono or multilayered, the inventive film being deposited onto said outermost coating layer or only part of it if desired. It has previously been disclosed that the nanostructured film could also be deposited onto an already nanostructured surface.

Now, the present invention will be described in more detail with reference to the following examples. These examples are provided only for illustrating the present invention and should not be construed as limiting the scope and spirit of the present invention.

### Examples

### Experimental measurements

Three samples for each case were prepared for measurements and the reported data were calculated in the average of three data. Control samples were commercial lenses directly coated with an anti-fouling top coat (Optool DSX).

Roughness measurements were carried out using Scanning Probe Microscope from Burleigh Instruments, Inc. (AFM, precision: ± 1 nm). Burleigh Vista AFM collects topography images in AC mode (tapping mode) controlled by Image Studio 4.0 software. Image data collection is in 5 µm x 5 µm scanning area at 1.5 Hz scan rate. Using Mountains Map Hi 4.0.2 software, the data is leveled and scan artifacts are removed, then Sq, the effective RMS roughness parameter, is automatically calculated from the software. RMS roughness is defined as the Root Mean Square deviation (peaks and valleys) of the surface from the mean surface level. The higher the RMS roughness, the rougher the surface and consequently the higher the WCA.

Abrasion tests were performed by a rubbing machine from Eberbach Corporation, in which a water-wet cloth (Tissue type Cotton TWILLX 1622) rubs the surface of the lenses for 50 times without applying additional weight. Thickness of the film was evaluated by ellipsometer. T (Transmittance, %) and haze were measured using Haze guard. Contact angle data were collected by FTA200 (First Ten Angstrom) equipment, using a 4µL liquid drop. All the measurements were done using static angle (precision: ± 2°). Adhesion measurements (Crosshatch adhesion test) were standard adhesion tests: 0 is the best adhesion, 1-4 is in the middle, and 5 is the poorest adhesion.

### Influence of the binder concentration on the thickness of the deposited nanostructured layer.

A coating solution comprising, in weight, the binder (Glymo, 1, 3 or 10%), 0.1 N HCl (0.23%), an aqueous solution of SiO₂ nanoparticles called "1034A" (size: 15 nm, 1.45%), an aqueous solution of SiO₂ nanoparticles (size: 100 nm, 2.50%, 1% dry particles), 2-butanone (0.17%), Al(AcAc)₃ as a curing catalyst (0.07%), a surfactant (0.005%) and methanol was deposited by spin or dip coating onto an Airwear™ ophthalmic lens. In this coating solution, the 1034A nanoparticles are only used for the improvement of coating hardness and abrasion resistance.

The nanostructured layer was dried and its physical thickness was measured. The results are shown in Table 1.

**Table 1**

| Amount of binder (wt %) | Spin speed (rpm) | Thickness (nm) |
|---|---|---|
| 1 | 50/100 | 85 |
| 1 | 50/150 | 60 |
| 3 | 50/100 | 192 |
| 10 | 50/100 | 516 |

### Film preparation process

Articles used in the below described experiments were production ophthalmic lenses sold under the name Airwear™, which comprise a polycarbonate (PC) substrate, or production ophthalmic lenses sold under the name T&L (Thin and Lite), which comprise a high index polyurethane substrate.

Example 1-3 are dedicated to layer-by-layer self-assembly processes by dip coating, while examples 4-5 involve deposition of a coating solution comprising both the binder and the nanoparticles by spin coating.

### Example 1

Polyethyleneimide (PEI) aqueous solution (0.02 M, pH = 5-7) was used as a binder to bond nanoparticles through electrostatic interactions. Three types of SiO₂ nanoparticle aqueous solutions (5-10wt %) were used, including 10-15nm particles (SiO₂A), 40-50nm particles (SiO₂B), and 100nm particles (SiO₂C).

An Airwear™ Essilor lens substrate was first corona-treated. Then the substrate was dipped into a PEI binder solution for 5 minutes (step b1), and rinsed with deionized water. The resulting coated substrate was then dipped into a nanoparticle solution for 5 minutes (step b2), and rinsed with deionized water, allowing obtaining one (sub-)layer of nanoparticles. If necessary, steps b1), b2) were repeated after initial step b2) to form additional sub-layers of nanoparticles. The film was dried with air, followed with a pre-cure process at 80 °C for 5 minutes and post-cure at 100 °C for 3 hours (step b3). Then, a fluorinated topcoat (Optool DSX) was applied by dip coating onto the above lens surface.

Properties of the prepared films are shown in Table 2.

**Table 2**

| Example | Coated articles | Roughness | T % | WCA | Haze |
|---|---|---|---|---|---|
| Comparative 1 | Control lens* | 2 | 92.4 | 110 | 0.11 |
| 1.1 | SiO₂A 1, 2, 3 or 4 sub-layers | 7 | 94.2 | 116 | 0.11 |
| 1.2 | SiO₂B 1 or 2 sub-layers | 23 | 95.1 | 131 | 0.13 |
| 1.3 | SiO₂B 3 or 4 sub-layers | 17 | 96.4 | 128 | 0.21 |
| 1.4 | SiO₂B/SiO₂A/SiO₂B | 26 | 96.2 | 139 | 0.14 |
| 1.5 | SiO₂C 1 layer | 59 | 95.2 | 139 | 0.38 |
| 1.6 | SiO₂C 2 or 3 sub-layers | 48 | 92.7 | 144 | 1.85 |
| 1.7 | SiO₂C/SiO₂B | 68 | 95.4 | 141 | 0.49 |

| | | | | | |
|---|---|---|---|---|---|
| * Commercial PC Airwear™ lens coated with a commercial Alizé top coat. | | | | | |

Compared to a control lens only coated with a smooth top coat, lenses prepared according to the protocol of example 1 exhibit better roughness, transmittance and WCA. Moreover, an apparent decrease in surface energy was observed, compared to the control lens without a nanostructured film. Among the nanoparticles systems investigated, some of them provided ultra high hydrophobic nanostructured films with low haze (e.g., 1.1, 1.2, 1.4). Example 1.6 reveals that a stack having several sub-layers of 100nm nanoparticles delivers a film with high haze, while only one 100nm nanoparticles layer allows for an acceptable haze (example 1.5). High haze is acceptable in certain applications, but not in the ophthalmic lens industry.

All films of example 1 showed high WCA, however, they did not have strong adhesion to the substrate, because the PEI binder is only capable of establishing non-covalent bonds (electrostatic interactions) with the nanoparticles and the surface of the substrate. Therefore, the films were easily damaged and removed from the applied surfaces like those described in WO 98/42452 and WO 01/14497.

### Example 2

The article used was an Airwear™ Essilor lens substrate, in which a moth-eye nanostructure (∼250 nm pitch) has been molded. That substrate was coated as described in example 1, using SiO₂B nanoparticles in step b2.

The static water and oleic acid contact angle data are summarized in Table 3. Compared to the commercial control lens onto which a standard smooth top coat is applied, the nanostructured film allowed to dramatically increasing both water and oleic acid contact angles, to almost "super hydrophobicity" and "super oleophobicity". An apparent decrease in surface energy was also noted, compared to the control lens. However, the nanostructured film of example 2 did not have good adhesion to the substrate because of the nature of the binder.

**Table 3**

| Static contact angle with: | Control lens* | Example 2 |
|---|---|---|
| Water | 110 | 145 |
| Oleic acid | 74 | 98 |

| | | |
|---|---|---|
| * Commercial PC Airwear™ lens coated with a commercial Alizé top coat. | | |

### Example 3

The same protocol as that of example 1 was repeated using a binder solution comprising 1-1.25wt % of hydrolyzed Glymo, which is a binder capable of establishing covalent bonds with the nanoparticles and the surface of the substrate. When such a binder film was applied to above SiO₂B/SiO₂A/SiO₂B or SiO₂C systems, the surface topography is described as figure 1B. Table 4 shows that the prepared articles with WCA ranging from 123 to 135° present good adhesion, high contact angle and low haze, especially the SiO₂B/SiO₂A/SiO₂B system, which maintained such performance after abrasion tests. An apparent decrease in surface energy was observed, compared to the control lens.

**Table 4**

| Example | Coated articles | T % | Haze | WCA | Adhesion test | Haze** | WCA** |
|---|---|---|---|---|---|---|---|
| Comparative 1 | Control lens* | 92.4 | 0.11 | 110 | 0 | 0.20 | 110 |
| 3.1 | SiO₂B/SiO₂A/SiO₂B | 94.1 | 0.18 | 123 | 0 | 0.44 | 120 |
| 3.2 | SiO₂C | 94.2 | 0.37 | 126 | 0 | 0.41 | 124 |

| | | | | | | | |
|---|---|---|---|---|---|---|---|
| * Commercial PC Airwear™ lens coated with a commercial Alizé top coat. ** Those measurements were performed after abrasion tests. | | | | | | | |

### Examples 4 and 5

Coating solutions were prepared by mixing Glymo, HCl and 1034A under agitation for 12 hours, then adding to the mixture methanol (solvent), an aqueous solution in which SiO₂C nanoparticles (size: 100 nm) are dispersed, 2-butanone, Al(AcAc)₃, and a surfactant (FC-430).

Composition of the coating solutions employed in examples 4 and 5 is shown in Table 5:

**Table 5**

| Example | 4.1, 5.1 | 4.2 | 4.3, 5.2 | 4.4 | 4.5 | 4.6, 4.7 | 4.8 |
|---|---|---|---|---|---|---|---|
| Binder (Glymo), g | 1.00 | 2.00 | 1.00 | 2.00 | 1.00 | 2.00 | 2.00 |
| 0.1 N HCl, g | 0.23 | 0.46 | 0.23 | 0.46 | 0.23 | 0.46 | 0.46 |
| 1034A g | 1.45 | 2.90 | 1.45 | 2.90 | 1.45 | 2.90 | 2.90 |
| Methanol, g | 94.575 | 91.65 | 92.075 | 89.15 | 84.575 | 81.65 | 74.15 |
| Aqueous solution of SiO₂C nanoparticles, g | 2.50 | 2.50 | 5.00 | 5.00 | 12.50 | 12.50 | 20.00 |
| 2-butanone, g | 0.17 | 0.34 | 0.17 | 0.34 | 0.17 | 0.34 | 0.34 |
| Al(AcAc)₃, g | 0.07 | 0.14 | 0.07 | 0.14 | 0.07 | 0.14 | 0.14 |
| Surfactant FC-430, g | 0.005 | 0.01 | 0.005 | 0.01 | 0.005 | 0.01 | 0.01 |
| | | | | | | | |
| Weight % dry SiO₂C nanoparticles | 1.00 | 1.00 | 2.00 | 2.00 | 5.00 | 5.00 | 8.00 |
| Ratio of binder/ nanoparticles | 1:1 | 2:1 | 1:2 | 1:1 | 1:5 | 1:2.5 | 1:4 |

### Example 4

An Airwear™ Essilor lens substrate was first corona-treated. Then the substrate was spin-coated with one of the above described coating solutions (step b4: 1 or 2 wt % binder; 1, 2 or 5 wt % nanoparticles) and the film (corresponding to figure 1B) was dried with air, followed with a pre-cure process at 80 °C for 5 minutes and post-cure at 100 °C for 3 hours (step b5). Then, a fluorinated topcoat (Optool DSX) was applied by dip coating onto the above lens surface. The performance test data are collected in Table 6.

**Table 6**

| Example** | T % | Haze | WCA | Adhesion test | Haze* | WCA* |
|---|---|---|---|---|---|---|
| 4.1 | 93.1 | 1.03 | 122 | 0 | 1.33 | 122 |
| 4.2 | 93.2 | 1.02 | 121 | 0 | 0.85 | 121 |
| 4.3 | 94.0 | 0.56 | 126 | 0 | 0.56 | 120 |
| 4.4 | 93.5 | 0.69 | 121 | 0 | 0.90 | 121 |
| 4.5 | 94.1 | 0.24 | 127 | 0 | 0.23 | 125 |
| 4.6 | 93.6 | 0.48 | 126 | 0 | 0.47 | 124 |
| 4.7*** | 93.7 | 0.38 | 129 | 0 | 0.41 | 124 |
| 4.8 | 92.5 | 0.46 | 133 | 0 | 0.47 | 126 |

| | | | | | | |
|---|---|---|---|---|---|---|
| * Those measurements were performed after abrasion tests. ** Spin coat speed: 500/1000 rpm unless otherwise noted. *** Spin coat speed: 500/1500 rpm. | | | | | | |

Most of the coated articles showed excellent adhesion to the substrate (crosshatch test 0), high WCA (121-133°), high transmittance (>92%), low haze (<0.8), and their performances are durable, which is very desirable to ophthalmic lens industry. They maintained high WCA (120-126°) and low haze after abrasion tests. WCA of the nanostructured films are higher than those of currently commercial lens surfaces (about 110°).

The general spin coat speed was 500/1000 rpm. In one case, a higher spin speed was applied for comparison, allowing obtaining slightly better results.

Nanostructured films with WCA reaching 130-140° and having good adhesion to the substrate or the underlying coating can be prepared by spin coating, albeit most of them cannot pass the abrasion tests, which means the films have WCA around 112° after wet rubbing test, close to the commercial lens surface with 110° of contact angle.

### Example 5

An Airwear™ Essilor lens substrate was first corona-treated and spin-coated with an adhesive layer (adhesion promoter: polyurethane W244). Then the coated substrate was spin-coated with one of the above described coating solutions (step b4: sample 5.1 was from the coating solution of sample 4.1, and sample 5.2 was from the coating solution of sample 4.3). The film (corresponding to figure 1B) was dried with air, followed with a pre-cure process at 80 °C for 5 minutes and post-cure at 100 °C for 3 hours (step b5). Then, a fluorinated topcoat (Optool DSX) was applied by dip coating onto the above lens surface. The performance test data are collected in Table 7.

**Table 7**

| Coated articles | T % | Haze | WCA | Adhesion test | Haze** | WCA** |
|---|---|---|---|---|---|---|
| Control lens* | 92.4 | 0.11 | 110 | 0 | 0.20 | 110 |
| 5.1 | 94.1 | 0.66 | 123 | 0 | 0.84 | 121 |
| 5.2 | 94.6 | 0.37 | 122 | 0 | 0.48 | 121 |

| | | | | | | |
|---|---|---|---|---|---|---|
| * Commercial PC Airwear™ lens coated with a commercial Alizé top coat. ** Those measurements were performed after abrasion tests. | | | | | | |

The coated articles showed excellent adhesion to the underlying coating (crosshatch test 0), high WCA, low haze, and maintained high WCA and low haze after abrasion tests. The results also show that the addition of an adhesive polyurethane layer decreased the film haze but kept the same WCA as the system without such a layer (compare example 4.1 with 5.1, 4.3 with 5.2). Also, a binder/nanoparticle ratio of 1:2 is preferable to a ratio of 1:1.

### Example 6

Examples 4.5, 4.6 and 4.8 were reproduced using KP 801M commercialized by Shin-Etsu Chemical instead of Optool DSX as a composition for making the anti-fouling top coat. KP 801M was deposited by evaporation. The WCA of the obtained samples were about 140°.

Table 8 exhibits the formulation of example mixture solutions A, B and C, which include different ratio of the binder Glymo and nanoparticles SiO2C. Solutions A, B, C are respectively corresponding to 4.5, 4.6, 4.8 solutions and have been renumbered for this example.

**Table 8**

| **Example Mixture Solution** | **A** | **B** | **C** |
|---|---|---|---|
| **Binder (Glymo), g** | 1.00 | 2.00 | 2.00 |
| **0.1 N HCl, g** | 0.23 | 0.46 | 0.46 |
| **1034A (15nm SiO2), g** | 1.45 | 2.90 | 2.90 |
| **Methanol, g** | 84.575 | 81.65 | 74.15 |
| **MP-1040, (SiO2C) g** | 12.50 | 12.50 | 20.00 |
| **2-butanone, g** | 0.17 | 0.34 | 0.34 |
| **Al(AcAC)₃, g** | 0.07 | 0.14 | 0.14 |
| **Surfactant FC-430, g** | 0.005 | 0.01 | 0.01 |

| **Corresponding Weitght % in the respective solutions** | | | |
|---|---|---|---|
| **Glymo** | 1.00 | 2.00 | 2.00 |
| **Dry MP-1040-SiO2C** | 5.00 | 5.00 | 8.00 |
| **Ratio of binder/particle** | 1:5 | 1:2.5 | 1:1.25 |

Table 9 shows the performance tests of three samples. Sample 6.1A, was obtained by applying solution A followed by vacuum-coating by OF110. The same process is used
-for sample 6. 2B by applying solution B instead of solution A.
and for sample 6.3 C by applying solution C instead of solution A.
All final samples showed excellent adhesion (crosshatch test 0), high contact angle and low haze, and maintained high contact angle and low haze after abrasion tests.

**Table 9**

| Vacuum-coated OF110 | | | | | | | | |
|---|---|---|---|---|---|---|---|---|
| Samples | | T % | Haze | CA (°) | | Crosshatch Dry | CA* (°) | |
| | Solution | | | Water | Oleic acid | | Water | Oleic acid |
| 6.1 | A | 94.3 | 0.25 | 140.44 | 92.52 | 0 | 137.74 | 90.66 |
| 6.2 | B | 93.7 | 0.42 | 137.74 | 90.95 | 0 | 134.56 | 88.43 |
| 6.3 | C | 92.6 | 0.45 | 143.12 | 94.99 | 0 | 139.35 | 91.05 |

| | | | | | | | | |
|---|---|---|---|---|---|---|---|---|
| Crosshatch adhesion test: 0 is the best adhesion, and 5 is the poorest adhesion. *: The contact angle measurements after abrasion tests (wet cloth rubbing with water for 50 times) | | | | | | | | |

### Example 7

The structured films were first prepared by spin coating of a mixture solution including a binder (1 or 2 wt %) and a particle (5 or 8 wt %). The general spin coat speed is 500/1000 rpm. The films were followed with a pre-cure process at 80°C for 5 minutes and post-cure at 110°C for 3 hours. Then a fluorinated material Optool DSX was applied on the top to achieve the final structured films.
Sample 7.1A was made from a freshly prepared mixture solution A described in example 6 and dip-coated by using the top coat solution Optool DSX.
The same process is used -for sample 7.2 B by applying solution B described in example 6 instead of solution A.
and for sample 7.3 C by applying solution C described in example 6 instead of solution A.
Table 10 shows the performance tests of three samples.

These samples showed excellent adhesion (crosshatch test 0), high contact angle and low haze, and maintained high contact angle and low haze after abrasion tests.

**Table 10**

| Dip-coated Optool DSX | | | | | | | | |
|---|---|---|---|---|---|---|---|---|
| Samples | | T % | Haze | CA (°) | | Crosshatch Dry | CA* (°) | |
| | Solution | | | Water | Oleic acid | | Water | Oleic acid |
| 7.1 | A | 94.5 | 0.22 | 138.89 | 91.55 | 0 | 138.35 | 91.24 |
| 7.2 | B | 93.4 | 0.45 | 140.39 | 93.75 | 0 | 138.10 | 97.25 |
| 7.3 | C | 92.7 | 0.46 | 137.28 | 91.25 | 0 | 136.95 | 90.49 |

| | | | | | | | | |
|---|---|---|---|---|---|---|---|---|
| Crosshatch adhesion test: 0 is the best adhesion, and 5 is the poorest adhesion. *: The contact angle measurements after abrasion tests (wet cloth rubbing with water for 50 times) | | | | | | | | |

## Claims

1. An article having at least one surface, wherein said surface is at least partially coated with a ultra high hydrophobic film having a surface roughness such that the film exhibits a static water contact angle at least equal to 115° and wherein said film is a nanostructured film comprising:
- a first layer comprising nanoparticles bound by at least one binder adhering to the surface of the article, **characterised in that** the binder and the nanoparticles being comprised in said first layer in an amount such that the weight ratio of binder / nanoparticles ranges from 2:1 to 1:15, and
- a second layer of an anti-fouling top coat at least partially coating said first layer.

2. An article according to claim 1, wherein the nanoparticles have a particle size of less than or equal to 150 nm, preferably less than or equal to 100 nm.

3. An article according to claim 1 or 2, wherein said first layer comprises nanoparticles having a particle size ranging from 20 to 150 nm, preferably from 20 to 100 nm.

4. An article according to any one of claims 1 or 2, wherein the static water contact angle is at least equal to 120°, preferably at least equal to 125°.

5. An article according to any one of claims 1 or 2, wherein the static water contact angle is equal to or less than 160°, preferably equal to or less than 150.

6. An article according to any one of claims 1 or 2, wherein the RMS surface roughness of the film ranges from 5 to 50 nm, more preferably from 10 to 30 nm and even more preferably from 10 to 20 nm.

7. An article according to any one of claims 1 or 2, wherein the anti-fouling top coat is made from a liquid coating material comprising at least one fluorinated compound.

8. An article according to claim 7, wherein the anti-fouling top coat comprises a fluorine-based resin comprising perfluoropropylene moieties.

9. An article according to any one of claims 1 or 2, wherein the fouling top coat comprises one or more silane or silazane bearing at least one group selected from fluorinated hydrocarcarbons, perfluorocarbons, fluorinated polyethers and perfluoropolyethers.

10. An article according to any one of claims 1 or 2, wherein the anti-fouling top coat reduces surface energy of the article to less than 20 mJ/m², preferably less than 14 mJ/m² and even better less than 12 mJ/m².

11. An article according to any one of claims 1 or 2, wherein the binder is a compound which is capable of being cross-linked.

12. An article according to any one of claims 1 or 2, wherein the binder is a silicon-containing binder selected from the group consisting of amino-functional silane or amino-functional siloxane compounds, hydroxyl- or lower alkoxy-terminated silanes, ureidoalkyl alkoxy silanes, dialkyl dialkoxy silanes, (meth)acrylic silanes, carboxylic silanes, silane-containing polyvinyl alcohol, vinylsilanes, allylsilanes, and mixtures thereof.

13. An article according to any one of claims 1 or 2, wherein the binder comprises epoxy alkoxy silanes compounds.

14. An article according to any one of claims 1 or 2, wherein the binder is a compound capable of establishing at least one covalent bond with a group at the surface of the article.

15. An article according to any one of claims 1 or 2, wherein the binder is a compound capable of establishing at least one covalent bond with a group at the surface of the nanoparticles.

16. An article according to any one of claims 1 or 2, wherein the binder is a compound capable of establishing covalent bonds with both groups at the surface of the nanoparticles and at the surface of the article.

17. An article according to any one of claims 1 or 2, wherein the nanoparticles have reactive groups capable of establishing at least one covalent bond with the binder.

18. An article according to any one of claims 1 or 2, wherein the coated article has an optical transmittance factor T higher than 85% in at least a range of wavelengths of the visible spectrum, more preferably higher than 90%, and even more preferably higher than 92%.

19. An article according to any one of claims 1 or 2, wherein the reflection in the visible range of the coated article is lower than 3%, and even better lower than 2%.

20. An article according to any one of claims 1 or 2, wherein the nanoparticles are inorganic nanoparticles chosen from metallic or metalloid oxides, nitrides, fluorides, or mixtures thereof.

21. An article according to claim 20, wherein the inorganic nanoparticles are chosen from nanoparticles of aluminum oxide, silicon oxide, zirconium oxide, titanium oxide, antimony oxide, tantalum oxide, zinc oxide, tin oxide, indium oxide, cerium oxide, Si₃N₄, MgF₂ or their mixtures.

22. An article according to any one of claims 1 or 2, wherein the binder and the nanoparticles are comprised in said first layer in an amount such that the weight ratio of binder / nanoparticles ranges from 1:1 to 1:15, more preferably from 1:1.1 to 1:10, and even better from 1:1.2 to 1:10.

23. An article according to any one of claims 1 or 2, wherein the film exhibits multiple length scales of roughness.

24. An article according to claim 23, wherein the first layer comprises nanoparticles with multiple size ranges.

25. An article according to claim 23, wherein the surface of the article to which the first layer adheres is a nanostructured surface.

26. An article according to any one of claims 1 or 2, wherein the physical thickness of the film ranges from 50 to 700nm, more preferably from 50 nm to 550 nm.

27. An article according to any one of claims 1 or 2, wherein the physical thickness of said first layer ranges from 30 to 250 nm, more preferably from 40 to 200 nm, and even more preferably from 50 to 150 nm.

28. An article according to any one of claims 1 or 2, wherein the article is made of a material chosen from metal, metal alloys, ceramics, glass, wood, wood like materials, composites, painted surfaces, synthetic polymers, stones.

29. An article according to any one of claims 1 or 2, wherein the article is an optical article, preferably an ophthalmic lens or lens blank.

30. An article according to any one of claims 1 or 2, wherein the article having at least one surface at least partially coated with a ultra high hydrophobic film comprise a substrate coated with an outermost coating layer, said outermost coating layer being chosen from an abrasion- and/or scratch-resistant coating, an impact-resistant coating or a mono or multilayered anti-reflection coating.

31. A process for obtaining a coated article according to any one of claims 1 to 30, comprising:
- a) providing an article having at least one surface,
- b) forming onto at least part of said surface of the article a first layer comprising nanoparticles bound by at least one binder adhering to said surface of the article, the binder and the nanoparticles being comprised in said first layer in an amount such that the weight ratio of binder / nanoparticles ranges from 2:1 to 1:15,
- c) depositing onto at least part of said first layer a layer of an anti-fouling top coat, and
- d) recovering an article which surface is at least partially coated with a ultra high hydrophobic nanostructured film having a surface roughness such that the film exhibits a static water contact angle at least equal to 115°.

32. A process according to claim 31, wherein formation of said first layer comprises:
- b1) depositing onto at least part of said surface of the article a layer of a coating solution comprising at least one binder,
- b2) depositing, onto the just deposited layer resulting from step b1), a layer of a coating solution comprising nanoparticles, and
- b3) hardening each deposited layer.

33. A process according to claim 31, wherein formation of said first layer comprises:
- b4) depositing onto at least part of said surface of the article a layer of a coating solution comprising at least one binder and nanoparticles, and
- b5) hardening each deposited layer.

34. A process according to claim 32, wherein steps b'1) and b'2) are performed once or more onto the layer resulting from step b2):
- b'1) depositing onto the just deposited layer resulting from the preceding step, a layer of a coating solution comprising at least one binder, and
- b'2) depositing, onto the just deposited layer resulting from the preceding step, a layer of a coating solution comprising nanoparticles.

35. A process according to claim 33, wherein steps b'1) and b'2) are performed once or more onto the layer resulting from step b4):
- b'1) depositing onto the just deposited layer resulting from the preceding step, a layer of a coating solution comprising at least one binder, and
- b'2) depositing, onto the just deposited layer resulting from the preceding step, a layer of a coating solution comprising nanoparticles.

36. A process according to claim 32, wherein step b'4) is performed once or more onto the layer resulting from step b2):
- b'4) depositing onto the just deposited layer resulting from the preceding step, a layer of a coating solution comprising at least one binder and nanoparticles.

37. A process according to claim 33, wherein step b'4) is performed once or more onto the layer resulting from step b4):
- b'4) depositing onto the just deposited layer resulting from the preceding step, a layer of a coating solution comprising at least one binder and nanoparticles.

38. A process according to claim 32, wherein a combination of:
i) steps b'1) and b'2); and
ii) step b'4);
is performed once or more in any order onto the layer resulting from step b2), steps b'1), b'2) and b'4) being:
- b'1) depositing onto the just deposited layer resulting from the preceding step, a layer of a coating solution comprising at least one binder, and
- b'2) depositing, onto the just deposited layer resulting from the preceding step, a layer of a coating solution comprising nanoparticles.
- b'4) depositing onto the just deposited layer resulting from the preceding step, a layer of a coating solution comprising at least one binder and nanoparticles.

39. A process according to claim 33, wherein a combination of:
i) steps b'1) and b'2); and
ii) step b'4);
is performed once or more in any order onto the layer resulting from step b4), steps b'1), b'2) and b'4) being:
- b'1) depositing onto the just deposited layer resulting from the preceding step, a layer of a coating solution comprising at least one binder, and
- b'2) depositing, onto the just deposited layer resulting from the preceding step, a layer of a coating solution comprising nanoparticles.
- b'4) depositing onto the just deposited layer resulting from the preceding step, a layer of a coating solution comprising at least one binder and nanoparticles.

40. A process according to any one of claims 31 to 39, wherein the nanoparticles are a mixture of nanoparticles with multiple size ranges.

41. A process according to any one of claims 34, 35, 38 or 39, wherein the nanoparticles employed in at least one step b'2) do not have the same size range as the nanoparticles initially deposited.

42. A process according to any one of claims 36 to 39, wherein the nanoparticles employed in at least one step b'4) do not have the same size range as the nanoparticles initially deposited.

43. A process according to claim 31, wherein the surface of the provided article is a nanostructured surface.

44. A process according to claim 43, wherein said nanostructured surface has been created by embossing, molding or transfer molding.

## Patentansprüche

1. Gegenstand mit mindestens einer Oberfläche, wobei die Oberfläche zumindest teilweise mit einem ultrahochhydrophoben Film mit einer Oberflächenrauheit beschichtet ist, bei der der Film einen statischen Wasserkontaktwinkel von mindestens gleich 115° aufweist und wobei es sich bei dem Film um einen nanostrukturierten Film handelt, der Folgendes umfasst:
- eine erste Schicht mit durch mindestens ein an der Oberfläche des Gegenstands haftendes Bindemittel zusammengehaltenen Nanoteilchen, **dadurch gekennzeichnet, dass** die erste Schicht das Bindemittel und die Nanoteilchen in einer Menge umfasst, bei der das Gewichtsverhältnis von Bindemittel / Nanoteilchen 2:1 bis 1:15 beträgt, und
- eine zweite Schicht einer Antifouling-Deckschicht, die die erste Schicht zumindest teilweise bedeckt.

2. Gegenstand nach Anspruch 1, wobei die Nanoteilchen eine Teilchengröße von weniger als oder gleich 150 nm, vorzugsweise weniger als oder gleich 100 nm, aufweisen.

3. Gegenstand nach Anspruch 1 oder 2, wobei die erste Schicht Nanoteilchen mit einer Teilchengröße im Bereich von 20 bis 150 nm, vorzugsweise 20 bis 100 nm, aufweist.

4. Gegenstand nach einem der Ansprüche 1 oder 2, wobei der statische Wasserkontaktwinkel mindestens gleich 120°, vorzugsweise mindestens gleich 125°, ist.

5. Gegenstand nach einem der Ansprüche 1 oder 2, wobei der statische Wasserkontaktwinkel gleich oder kleiner als 160°, vorzugsweise gleich oder kleiner als 150°, ist.

6. Gegenstand nach einem der Ansprüche 1 oder 2, wobei die RMS-Oberflächenrauheit des Films 5 bis 50 nm, weiter bevorzugt 10 bis 30 nm und noch weiter bevorzugt 10 bis 20 nm beträgt.

7. Gegenstand nach einem der Ansprüche 1 oder 2, wobei die Antifouling-Deckschicht aus einem flüssigen Beschichtungsmaterial, das mindestens eine fluorierte Verbindung umfasst, hergestellt ist.

8. Gegenstand nach Anspruch 7, wobei die Antifouling-Deckschicht ein Perfluorpropyleneinheiten umfassendes Harz auf Fluorbasis umfasst.

9. Gegenstand nach einem der Ansprüche 1 oder 2, wobei die Fouling-Deckschicht ein oder mehrere Silane oder Silazane umfasst, die mindestens eine aus fluorierten Kohlenwasserstoffen, Perfluorkohlenwasserstoffen, fluorierten Polyethern und Perfluorpolyethern ausgewählte Gruppe tragen.

10. Gegenstand nach einem der Ansprüche 1 oder 2, wobei die Antifouling-Deckschicht die Oberflächenenergie des Gegenstands auf weniger als 20 mJ/m², vorzugsweise weniger als 14 mJ/m² und noch besser weniger als 12 mJ/m² verringert.

11. Gegenstand nach einem der Ansprüche 1 oder 2, wobei es sich bei dem Bindemittel um eine vernetzbare Verbindung handelt.

12. Gegenstand nach einem der Ansprüche 1 oder 2, wobei es sich bei dem Bindemittel um ein siliciumhaltiges Bindemittel handelt, das aus der Gruppe bestehend aus aminofunktionellem Silan oder aminofunktionellen Siloxanverbindungen, Hydroxyl- oder Niederalkoxyterminierten Silanen, Ureidoalkylalkoxysilanen Dialkyldialkoxysilanen, (Meth)acrylsilanen, Carbonsäuresilanen, silanhaltigem Polyvinylalkohol, Vinylsilanen, Allylsilanen und Mischungen davon ausgewählt ist.

13. Gegenstand nach einem der Ansprüche 1 oder 2, wobei das Bindemittel Epoxyalkoxysilanverbindungen umfasst.

14. Gegenstand nach einem der Ansprüche 1 oder 2, wobei es sich bei dem Bindemittel um eine Verbindung handelt, die mindestens eine kovalente Bindung mit einer Gruppe auf der Oberfläche des Gegenstands eingehen kann.

15. Gegenstand nach einem der Ansprüche 1 oder 2, wobei es sich bei dem Bindemittel um eine Verbindung handelt, die mindestens eine kovalente Bindung mit einer Gruppe auf der Oberfläche der Nanoteilchen eingehen kann.

16. Gegenstand nach einem der Ansprüche 1 oder 2, wobei es sich bei dem Bindemittel um eine Verbindung handelt, die sowohl mit Gruppen auf der Oberfläche der Nanoteilchen als auch mit Gruppen auf der Oberfläche des Gegenstands eine kovalente Bindung eingehen kann.

17. Gegenstand nach einem der Ansprüche 1 oder 2, wobei die Nanoteilchen reaktive Gruppen aufweisen, die mindestens eine kovalente Bindung mit dem Bindemittel eingehen können.

18. Gegenstand nach einem der Ansprüche 1 oder 2, wobei der beschichtete Gegenstand einen optischen Transmissionsfaktor T aufweist, der in mindestens einem Wellenlängenbereich des sichtbaren Spektrums höher als 85%, weiter bevorzugt höher als 90% und noch weiter bevorzugt höher als 92% ist.

19. Gegenstand nach einem der Ansprüche 1 oder 2, wobei die Reflexion im sichtbaren Bereich des beschichteten Gegenstands geringer als 3% und noch besser niedriger als 2% ist.

20. Gegenstand nach einem der Ansprüche 1 oder 2, wobei die Nanoteilchen aus Metall- oder Metalloidoxiden, Nitriden, Fluoriden oder Mischungen davon ausgewählte anorganische Nanoteilchen sind.

21. Gegenstand nach Anspruch 20, wobei die anorganischen Nanoteilchen aus Nanoteilchen von Aluminiumoxid, Siliciumoxid, Zirkonoxid, Titanoxid, Antimonoxid, Tantaloxid, Zinkoxid, Zinnoxid, Indiumoxid, Ceroxid, Si₃N₄, MgF₂ oder ihren Mischungen ausgewählt sind.

22. Gegenstand nach einem der Ansprüche 1 oder 2, wobei die erste Schicht das Bindemittel und die Nanoteilchen in einer solchen Menge umfasst, bei der das Gewichtsverhältnis von Bindemittel / Nanoteilchen 1:1 bis 1:15, weiter bevorzugt 1:1,1 bis 1:10 und noch besser 1:1,2 bis 1:10 beträgt.

23. Gegenstand nach einem der Ansprüche 1 oder 2, wobei der Film in Abhängigkeit der Längenskala mehrere Rauheitsgrade aufweist.

24. Gegenstand nach Anspruch 23, wobei die erste Schicht Nanoteilchen aus mehreren Größenbereichen umfasst.

25. Gegenstand nach Anspruch 23, wobei es sich bei der Oberfläche des Gegenstands, an dem die erste Schicht haftet, um eine nanostrukturierte Oberfläche handelt.

26. Gegenstand nach einem der Ansprüche 1 oder 2, wobei die physikalische Dicke des Films 50 bis 700 nm, weiter bevorzugt 50 bis 550 nm, beträgt.

27. Gegenstand nach einem der Ansprüche 1 oder 2, wobei die physikalische Dicke der ersten Schicht 30 bis 250 nm, weiter bevorzugt 40 bis 200 nm und noch weiter bevorzugt 10 bis 150 nm beträgt.

28. Gegenstand nach einem der Ansprüche 1 oder 2, wobei der Gegenstand aus einem Material hergestellt ist, das aus Metall, Metalllegierungen, Keramik, Glas, Holz, holzartigen Stoffen, Verbundwerkstoffen, lackierten Oberflächen, synthetischen Polymeren, Steinen ausgewählt ist.

29. Gegenstand nach einem der Ansprüche 1 oder 2, wobei es sich bei dem Gegenstand um einen optischen Gegenstand, vorzugsweise eine ophthalmische Linse oder einen Linsenrohling, handelt.

30. Gegenstand nach einem der Ansprüche 1 oder 2, wobei der Gegenstand mit mindestens einer Oberfläche, die zumindest teilweise mit einem ultrahochhydrophoben Film beschichtet ist, ein Substrat umfasst, das mit einer äußersten Beschichtungsschicht beschichtet ist, wobei die äußerste Beschichtungsschicht aus einer abrieb- und/oder kratzfesten Beschichtung, einer schlagfesten Beschichtung oder einer ein- oder mehrschichtigen Antireflexionsbeschichtung ausgewählt ist.

31. Verfahren zum Erhalt eines beschichteten Gegenstands nach einem der Ansprüche 1 bis 30, umfassend:
- a) Bereitstellen eines Gegenstands mit mindestens einer Oberfläche,
- b) Bilden einer ersten Schicht, die Nanoteilchen, die durch mindestens ein an der Oberfläche des Gegenstands haftendes Bindemittel zusammengehalten werden, umfasst, auf zumindest einem Teil der Oberfläche des Gegenstands, wobei die erste Schicht das Bindemittel und die Nanoteilchen in einer Menge umfasst, bei der das Gewichtsverhältnis von Bindemittel / Nanoteilchen 2:1 bis 1:15 beträgt,
- c) Abscheiden einer Schicht einer Antifouling-Deckschicht auf zumindest einem Teil der ersten Schicht und
- d) Gewinnen eines Gegenstands, dessen Oberfläche zumindest teilweise mit einem ultrahochhydrophoben nanostrukturierten Film mit einer Oberflächenrauheit beschichtet ist, bei der der Film einen statischen Wasserkontaktwinkel von mindestens gleich 115° aufweist.

32. Verfahren nach Anspruch 31, wobei die Bildung der ersten Schicht Folgendes umfasst:
- b1) Abscheiden einer Schicht einer mindestens ein Bindemittel umfassenden Beschichtungslösung auf zumindest einem Teil der Oberfläche des Gegenstands,
- b2) Abscheiden einer Schicht einer Nanoteilchen umfassenden Beschichtungslösung auf der gerade abgeschiedenen, aus Schritt b1) erhaltenen Schicht,
- b3) Härten jeder abgeschiedenen Schicht.

33. Verfahren nach Anspruch 31, wobei die Bildung der ersten Schicht Folgendes umfasst:
- b4) Abscheiden einer Schicht einer mindestens ein Bindemittel und Nanoteilchen umfassenden Beschichtungslösung auf zumindest einem Teil der Oberfläche des Gegenstands und
- b5) Härten jeder abgeschiedenen Schicht.

34. Verfahren nach Anspruch 32, wobei Schritte b'1) und b'2) einmal oder mehrmals an der aus Schritt b2) erhaltenen Schicht durchgeführt werden:
- b'1) Abscheiden einer Schicht einer mindestens ein Bindemittel umfassenden Beschichtungslösung auf der gerade abgeschiedenen, aus dem vorhergehenden Schritt erhaltenen Schicht und
- b'2) Abscheiden einer Schicht einer Nanoteilchen umfassenden Beschichtungslösung auf der gerade abgeschiedenen, aus dem vorhergehenden Schritt erhaltenen Schicht.

35. Verfahren nach Anspruch 33, wobei die Schritte b'1) und b'2) einmal oder mehrmals auf der aus Schritt b4) erhaltenen Schicht durchgeführt werden:
- b'1) Abscheiden einer Schicht einer mindestens ein Bindemittel umfassenden Beschichtungslösung auf der gerade abgeschiedenen, aus dem vorhergehenden Schritt erhaltenen Schicht und
- b'2) Abscheiden einer Schicht einer Nanoteilchen umfassenden Beschichtungslösung auf der gerade abgeschiedenen, aus dem vorhergehenden Schritt erhaltenen Schicht.

36. Verfahren nach Anspruch 32, wobei Schritt b'4) einmal oder mehrmals auf der aus Schritt b2) erhaltenen Schicht durchgeführt wird:
- b'4) Abscheiden einer Schicht einer mindestens ein Bindemittel und Nanoteilchen umfassenden Beschichtungslösung auf der gerade abgeschiedenen, aus dem vorhergehenden Schritt erhaltenen Schicht.

37. Verfahren nach Anspruch 33, wobei Schritt b'4) einmal oder mehrmals an der aus Schritt b4) resultierenden Schicht durchgeführt wird:
- b'4) Abscheiden einer Schicht einer mindestens ein Bindemittel und Nanoteilchen umfassenden Beschichtungslösung auf der gerade abgeschiedenen, aus dem vorhergehenden Schritt erhaltenen Schicht.

38. Verfahren nach Anspruch 32, wobei eine Kombination von:
i) Schritten b'1) und b'2); und
ii) Schritt b'4)
einmal oder mehrmals in beliebiger Reihenfolge auf die aus Schritt b2) resultierende Schicht durchgeführt wird, wobei die Schritte b'1), b'2) und b'4) die folgenden sind:
- b'1) Abscheiden einer Schicht einer mindestens ein Bindemittel umfassenden Beschichtungslösung auf der gerade abgeschiedenen, aus dem vorhergehenden Schritt erhaltenen Schicht und
- b'2) Abscheiden einer Schicht einer Nanoteilchen umfassenden Beschichtungslösung auf der gerade abgeschiedenen, aus dem vorhergehenden Schritt erhaltenen Schicht
- b'4) Abscheiden einer Schicht einer mindestens ein Bindemittel und Nanoteilchen umfassenden Beschichtungslösung auf der gerade abgeschiedenen, aus dem vorhergehenden Schritt erhaltenen Schicht.

39. Verfahren nach Anspruch 33, wobei eine Kombination von:
i) Schritten b'1) und b'2); und
ii) Schritt b'4)
einmal oder mehrmals in beliebiger Reihenfolge auf die aus Schritt b4) erhaltene Schicht durchgeführt wird, wobei die Schritte b'1), b'2) und b'4) die folgenden sind:
- b'1) Abscheiden einer Schicht einer mindestens ein Bindemittel umfassenden Beschichtungslösung auf der gerade abgeschiedenen, aus dem vorhergehenden Schritt erhaltenen Schicht und
- b'2) Abscheiden einer Schicht einer Nanoteilchen umfassenden Beschichtungslösung auf der gerade abgeschiedenen, aus dem vorhergehenden Schritt erhaltenen Schicht,
- b'4) Abscheiden einer Schicht einer mindestens ein Bindemittel und Nanoteilchen umfassenden Beschichtungslösung auf der gerade abgeschiedenen, aus dem vorhergehenden Schritt erhaltenen Schicht.

40. Verfahren nach einem der Ansprüche 31 bis 39, wobei es sich bei den Nanoteilchen um eine Mischung von Nanoteilchen aus mehreren Größenbereichen handelt.

41. Verfahren nach einem der Ansprüche 34, 35, 38 oder 39, wobei die in zumindest einem Schritt b'2) eingesetzten Nanoteilchen nicht den gleichen Größenbereich wie die anfänglich abgeschiedenen Nanoteilchen aufweisen.

42. Verfahren nach einem der Ansprüche 36 bis 39, wobei die in zumindest einem Schritt b'4) eingesetzten Nanoteilchen nicht den gleichen Größenbereich wie die anfänglich abgeschiedenen Nanoteilchen aufweisen.

43. Verfahren nach Anspruch 31, wobei es sich bei der Oberfläche des bereitgestellten Gegenstands um eine nanostrukturierte Oberfläche handelt.

44. Verfahren nach Anspruch 43, wobei die nanostrukturierte Oberfläche durch Prägen, Formen oder Spritzpressen erzeugt wurde.

## Revendications

1. Article possédant au moins une surface, ladite surface étant au moins partiellement revêtue avec un film hautement hydrophobe possédant une rugosité de surface telle que le film présente un angle de contact statique avec l'eau au moins égal à 115° et ledit film étant un film nanostructuré comprenant :
- une première couche comprenant des nanoparticules liées par au moins un liant adhérant à la surface de l'article, **caractérisée en ce que** le liant et les nanoparticules sont comprises dans ladite première couche en une quantité telle que le rapport pondéral de liant/nanoparticules se situe dans la plage de 2:1 à 1:15, et
- une deuxième couche d'un revêtement de finition antisalissure revêtant au moins partiellement ladite première couche.

2. Article selon la revendication 1, les nanoparticules possédant une grosseur de particule inférieure ou égale à 150 nm, préférablement inférieure ou égale à 100 nm.

3. Article selon la revendication 1 ou 2, ladite première couche comprenant des nanoparticules possédant une grosseur de particule dans la plage de 20 à 150 nm, préférablement de 20 à 100 nm.

4. Article selon l'une quelconque des revendications 1 et 2, l'angle de contact statique avec l'eau étant au moins égal à 120°, préférablement au moins égal à 125°.

5. Article selon l'une quelconque des revendications 1 et 2, l'angle de contact statique avec l'eau étant égal ou inférieur à 160°, préférablement égal ou inférieur à 150°.

6. Article selon l'une quelconque des revendications 1 et 2, la rugosité de surface RMS du film se situant dans la plage de 5 à 50 nm, plus préférablement de 10 à 30 nm et encore plus préférablement de 10 à 20 nm.

7. Article selon l'une quelconque des revendications 1 et 2, le revêtement de finition antisalissure étant composé d'un matériau de revêtement liquide comprenant au moins un composé fluoré.

8. Article selon la revendication 7, le revêtement de finition antisalissure comprenant une résine à base de fluor comprenant des fragments perfluoropropylène.

9. Article selon l'une quelconque des revendications 1 et 2, le revêtement de finition antisalissure comprenant un ou plusieurs silanes ou silazanes portant au moins un groupe choisi parmi des hydrocarbures fluorés, des perfluorocarbures, des polyéthers fluorés et des perfluoropolyéthers.

10. Article selon l'une quelconque des revendications 1 et 2, le revêtement de finition antisalissure réduisant l'énergie de surface de l'article à moins de 20 mJ/m², préférablement moins de 14 mJ/m² et encore mieux moins de 12 mJ/m².

11. Article selon l'une quelconque des revendications 1 et 2, le liant étant un composé qui est capable d'être réticulé.

12. Article selon l'une quelconque des revendications 1 et 2, le liant étant un liant contenant du silicium choisi dans le groupe constitué par des composés de type silane fonctionnalisé par amino et siloxane fonctionnalisé par amino, des silanes terminés par hydroxyle ou par alcoxy inférieur, des uréidoalkylalcoxysilanes, des dialkyldialcoxysilanes, des silanes (méth)acryliques, des silanes carboxyliques, un poly(alcool vinylique) contenant un silane, des vinylsilanes, des allylsilanes, et des mélanges correspondants.

13. Article selon l'une quelconque des revendications 1 et 2, le liant comprenant des composés de type époxyalcoxysilanes.

14. Article selon l'une quelconque des revendications 1 et 2, le liant étant un composé capable d'établir au moins une liaison covalente avec un groupe à la surface de l'article.

15. Article selon l'une quelconque des revendications 1 et 2, le liant étant un composé capable d'établir au moins une liaison covalente avec un groupe à la surface des nanoparticules.

16. Article selon l'une quelconque des revendications 1 et 2, le liant étant un composé capable d'établir des liaisons covalentes avec à la fois des groupes à la surface des nanoparticules et à la surface de l'article.

17. Article selon l'une quelconque des revendications 1 et 2, les nanoparticules possédant des groupes réactifs capables d'établir au moins une liaison covalente avec le liant.

18. Article selon l'une quelconque des revendications 1 et 2, l'article revêtu possédant un facteur de transmittance optique T supérieur à 85 % dans au moins une plage de longueurs d'onde du spectre visible, plus préférablement supérieur à 90 %, et encore plus préférablement supérieur à 92 %.

19. Article selon l'une quelconque des revendications 1 et 2, la réflexion dans la plage du visible de l'article revêtu étant inférieure à 3 %, et encore mieux inférieure à 2 %.

20. Article selon l'une quelconque des revendications 1 et 2, les nanoparticules étant des nanoparticules inorganiques choisies parmi des oxydes métalliques et métalloïdes, des nitrures, des fluorures, et des mélanges correspondants.

21. Article selon la revendication 20, les nanoparticules inorganiques étant choisies parmi des nanoparticules d'oxyde d'aluminium, d'oxyde de silicium, d'oxyde de zirconium, d'oxyde de titane, d'oxyde d'antimoine, d'oxyde de tantale, d'oxyde de zinc, d'oxyde d'étain, d'oxyde d'indium, d'oxyde de cérium, Si₃N₄, MgF₂ et leurs mélanges.

22. Article selon l'une quelconque des revendications 1 et 2, le liant et les nanoparticules étant compris dans ladite première couche en une quantité telle que le rapport pondéral de liant/nanoparticules se situe dans la plage de 1:1 à 1:15, plus préférablement de 1:1,1 à 1:10, et encore mieux de 1:1,2 à 1:10.

23. Article selon l'une quelconque des revendications 1 et 2, le film présentant plusieurs échelles de longueur de rugosité.

24. Article selon la revendication 23, la première couche comprenant des nanoparticules dotées de plusieurs plages de grosseur.

25. Article selon la revendication 23, la surface de l'article à laquelle la première couche adhère étant une surface nanostructurée.

26. Article selon l'une quelconque des revendications 1 et 2, l'épaisseur physique du film se situant dans la plage de 50 à 700 nm, plus préférablement de 50 nm à 550 nm.

27. Article selon l'une quelconque des revendications 1 et 2, l'épaisseur physique de ladite première couche se situant dans la plage de 30 à 250 nm, plus préférablement de 40 à 200 nm, et encore plus préférablement de 50 à 150 nm.

28. Article selon l'une quelconque des revendications 1 et 2, l'article étant composé d'une matière choisie parmi le métal, les alliages métalliques, les céramiques, le verre, le bois, les matériaux semblables au bois, les composites, les surfaces peintes, les polymères synthétiques, les pierres.

29. Article selon l'une quelconque des revendications 1 et 2, l'article étant un article optique, préférablement une lentille ophtalmique ou une ébauche de lentille.

30. Article selon l'une quelconque des revendications 1 et 2, l'article possédant au moins une surface au moins partiellement revêtue avec un film hautement hydrophobe comprenant un substrat revêtu avec une couche de revêtement la plus à l'extérieur, ladite couche de revêtement la plus à l'extérieur étant choisie parmi un revêtement résistant à l'abrasion et/ou aux rayures, un revêtement résistant à l'impact et un revêtement antireflet monocouche ou multicouche.

31. Procédé pour l'obtention d'un article revêtu selon l'une quelconque des revendications 1 à 30, comprenant :
- a) la mise à disposition d'un article possédant au moins une surface,
- b) la formation sur au moins une partie de ladite surface de l'article d'une première couche comprenant des nanoparticules liées par au moins un liant adhérant à ladite surface de l'article, le liant et les nanoparticules étant compris dans ladite première couche en une quantité telle que le rapport pondéral de liant/nanoparticules se situe dans la plage de 2:1 à 1:15,
- c) le dépôt sur au moins une partie de ladite première couche d'une couche d'un revêtement de finition antisalissure, et
- d) le recouvrement d'un article dont la surface est au moins partiellement revêtue avec un film nanostructuré hautement hydrophobe possédant une rugosité de surface telle que le film présente un angle de contact statique avec l'eau au moins égal à 115°.

32. Procédé selon la revendication 31, la formation de ladite première couche comprenant :
- b1) le dépôt sur au moins une partie de ladite surface de l'article d'une couche d'une solution de revêtement comprenant au moins un liant,
- b2) le dépôt, sur la couche juste déposée résultant de l'étape b1), d'une couche d'une solution de revêtement comprenant des nanoparticules, et
- b3) le durcissement de chaque couche déposée.

33. Procédé selon la revendication 31, la formation de ladite première couche comprenant :
- b4) le dépôt sur au moins une partie de ladite surface de l'article d'une couche d'une solution de revêtement comprenant au moins un liant et des nanoparticules, et
- b5) le durcissement de chaque couche déposée.

34. Procédé selon la revendication 32, les étapes b'1) et b'2) étant réalisées une fois ou plus sur la couche résultant de l'étape b2) :
- b'1) dépôt sur la couche juste déposée résultant de l'étape précédente, d'une couche d'une solution de revêtement comprenant au moins un liant, et
- b'2) le dépôt sur la couche juste déposée résultant de l'étape précédente, d'une couche d'une solution de revêtement comprenant des nanoparticules.

35. Procédé selon la revendication 33, les étapes b'1) et b'2) étant réalisées une fois ou plus sur la couche résultant de l'étape b4) :
- b'1) dépôt sur la couche juste déposée résultant de l'étape précédente, d'une couche d'une solution de revêtement comprenant au moins un liant, et
- b'2) le dépôt sur la couche juste déposée résultant de l'étape précédente, d'une couche d'une solution de revêtement comprenant des nanoparticules.

36. Procédé selon la revendication 32, l'étape b'4) étant réalisée une fois ou plus sur la couche résultant de l'étape b2) :
- b'4) dépôt sur la couche juste déposée résultant de l'étape précédente, d'une couche d'une solution de revêtement comprenant au moins un liant et des nanoparticules.

37. Procédé selon la revendication 33, l'étape b'4) étant réalisée une fois ou plus sur la couche résultant de l'étape b4) :
- b'4) dépôt sur la couche juste déposée résultant de l'étape précédente, d'une couche d'une solution de revêtement comprenant au moins un liant et des nanoparticules.

38. Procédé selon la revendication 32, une combinaison :
i) des étapes b'1) et b'2) ; et
ii) de l'étape b'4) ;
étant réalisée une fois ou plus dans un ordre quelconque sur la couche résultant de l'étape b2), les étapes b'1), b'2) et b'4) étant :
- b'1) dépôt sur la couche juste déposée résultant de l'étape précédente, d'une couche d'une solution de revêtement comprenant au moins un liant, et
- b'2) le dépôt sur la couche juste déposée résultant de l'étape précédente, d'une couche d'une solution de revêtement comprenant des nanoparticules,
- b'4) dépôt sur la couche juste déposée résultant de l'étape précédente, d'une couche d'une solution de revêtement comprenant au moins un liant et des nanoparticules.

39. Procédé selon la revendication 33, une combinaison :
i) des étapes b'1) et b'2) ; et
ii) de l'étape b'4) ;
étant réalisée une fois ou plus dans un ordre quelconque sur la couche résultant de l'étape b4), les étapes b'1), b'2) et b'4) étant :
- b'1) dépôt sur la couche juste déposée résultant de l'étape précédente, d'une couche d'une solution de revêtement comprenant au moins un liant, et
- b'2) le dépôt sur la couche juste déposée résultant de l'étape précédente, d'une couche d'une solution de revêtement comprenant des nanoparticules,
- b'4) dépôt sur la couche juste déposée résultant de l'étape précédente, d'une couche d'une solution de revêtement comprenant au moins un liant et des nanoparticules.

40. Procédé selon l'une quelconque des revendications 31 à 39, les nanoparticules étant un mélange de nanoparticules dotées de plusieurs plages de grosseur.

41. Procédé selon l'une quelconque des revendications 34, 35, 38 ou 39, les nanoparticules employées dans au moins une étape b'2) ne possédant pas la même plage de grosseur que les nanoparticules déposées initialement.

42. Procédé selon l'une quelconque des revendications 36 à 39, les nanoparticules employées dans au moins une étape b'4) ne possédant pas la même plage de grosseur que les nanoparticules déposées initialement.

43. Procédé selon la revendication 31, la surface de l'article mis à disposition étant une surface nanostructurée.

44. Procédé selon la revendication 43, ladite surface nanostructurée ayant été créée par gaufrage, par moulage ou par moulage par transfert.
